# EUROPEAN PATENT APPLICATION

(11) **EP 4 318 305 A1**
(43) Date of publication of application: **07.02.2024**
(21) Application number: 21856972.1
(22) Date of filing: 16.12.2021
(51) Int. Cl.: G06K 9/62, G06F 3/14, G06V 10/10, G08B 21/18

(54) **METHOD AND DEVICE FOR ANALYZING AND EVALUATING CONTENT**

(30) Priority: 24.05.2021 KR 20210066496; 28.09.2021 KR 20210128346
(71) Applicant: Samsung Electronics Co., Ltd., Suwon-si, Gyeonggi-do 16677 (KR)
(72) Inventor: HAN, Junkyu, Suwon-si Gyeonggi-do 16677 (KR)
(74) Representative: HGF
(86) International application number: PCT/KR2021/019154
(87) International publication number: WO 2022/250233

(57) **Abstract**

According to an embodiment of the disclosure, a method of analyzing and evaluating content at a display device, includes obtaining a speech input of a user of the display device. The method further includes determining an intent of the user based on a result of interpreting the speech input. The method further includes obtaining reference data based on the intent of the user. The method further includes obtaining submission content from an external device connected to the display device. The method further includes determining at least one target object to be compared with the reference data from among objects included in the submission content. The method further includes evaluating the submission content by comparing the at least one target object with the reference data.

## Description

### TECHNICAL FIELD

Embodiments of the disclosure relate to a method and apparatus for analyzing and evaluating content, and more particularly, to a method and apparatus for analyzing and evaluating content received from an external device based on an intent and context of a user of the display device.

### BACKGROUND ART

In some instances, in-person classes and/or in-person conferences may be replaced by (or: no contact, zero contact, non-contact etc.) remote (e.g., contact-free) classes and/or remote conferences (e.g., meetings). That is, remote classes and/or conferences may be desirable over in-person classes and/or conferences, as the remote meetings may be useful in terms of time and space over their in-person counterparts. For the remote class or remote meeting, people may participate contact-free in the class and/or meeting using communication devices, such as personal computers (PCs), laptops, tablets, and the like.

### DESCRIPTION OF EMBODIMENTS

### TECHNICAL PROBLEM

Participants of a remote class and/or conference may be located in different spaces (e.g., locations), as such, moderators and/or participants of the remote meetings may be unable to check, in real time, the content of other participants. For example, in a case of contact-free remote classes, a moderator may experience difficulty when attempting to determine whether a student is using different content. Furthermore, even outside of contact-free cases, checking and evaluating content of another participant may disturb processing flows of the meeting and/or class.

Hence, there is a need for a method of evaluating content related to a device of another participant by determining the intent and situation of a user of a device without intervention of the user.

### TECHNICAL SOLUTION TO PROBLEM

According to an embodiment of the disclosure, a method of analyzing and evaluating content at a display device comprises obtaining a speech input of a user of the display device. The method further comprises determining an intent of the user, based on a result of interpreting the speech input. The method further comprises obtaining reference data based on the intent of the user. The method further comprises obtaining submission content from an external device. The external device is connected to the display device. The method further comprises determining at least one target object to be compared with the reference data from among objects included in the submission content. The method further comprises evaluating the submission content by comparing the at least one target object with the reference data.

According to an embodiment of the disclosure, a display device for analyzing and evaluating content comprises a display, a speech receiver, a communication interface, a memory storage, and at least one processor. The speech receiver is configured to obtain a speech input of a user. The communication interface is configured to obtain submission content from an external device. The external device is connected to the display device. The memory storage is configured to store a program. The program includes at least one instruction. The at least one processor is communicatively coupled to the display, the speech receiver, the communication interface, and the memory storage. The at least one processor is configured to execute the at least one instruction to determine an intent of the user based on a result of interpreting the speech input of the user. The at least one processor is further configured to obtain reference data based on the intent of the user. The at least one processor is further configured to determine at least one target object to be compared with the reference data from among objects included in the submission content. The at least one processor is further configured to evaluate the submission content by comparing the at least one target object with the reference data.

According to an embodiment of the disclosure, a method of analyzing and evaluating content at a display device comprises obtaining a plurality of object sets included in a plurality of pieces of content. The plurality of pieces of content having been received from a plurality of external devices connected to the display device. The method further comprises determining an intent of a user of the display device based on a result of interpreting the plurality of object sets. The method further comprises evaluating each of the plurality of pieces of content based on the intent of the user.

According to an embodiment of the disclosure, a display device for analyzing and evaluating content comprises a display, a communication interface, a memory storage, and at least one processor. The communication interface is configured to receive each of a plurality of pieces of content from a plurality of external devices connected to the display device. The memory storage is configured to store a program. The program includes at least one instruction. The at least one processor is communicatively coupled to the display, the communication interface, and the memory storage. The at least one processor is configured to execute the at least one instruction to obtain a plurality of object sets included in a plurality of pieces of content. The at least one processor is further configured to determine an intent of a user of the display device based on a result of interpreting the plurality of object sets. The at least one processor is further configured to evaluate each of the plurality of pieces of content based on the intent of the user.

According to an embodiment of the disclosure, a computer-readable storage medium stores instructions that, when executed by at least one processor of a display device, cause the display device to perform the aforementioned methods of analyzing and evaluating content.

### ADVANTAGEOUS EFFECTS OF DISCLOSURE

According to an embodiment of the disclosure, a display device may evaluate content without intervention of a user by evaluating the content received from an external device based on an intent and context of the user of the display device. Furthermore, a situation in which a user of an external device is intentionally or unintentionally using an inappropriate content may be determined and fed back even when the user is located in a different space (e.g., during a remote class).

### BRIEF DESCRIPTION OF DRAWINGS

FIG. 1 illustrates a system for evaluating content of an external device, according to various embodiments of the disclosure.
FIG. 2 is a block diagram of example components of a display device, according to various embodiments of the disclosure.
FIG. 3 is a first operational flowchart of an example method, to be performed by a display device, of evaluating content of an external device, according to various embodiments of the disclosure.
FIG. 4 is a first diagram illustrating an example method, to be performed by a display device, of evaluating content of an external device, according to various embodiments of the disclosure.
FIG. 5 is a second operational flowchart of an example method, to be performed by a display device, of evaluating content of an external device, according to various embodiments of the disclosure.
FIG. 6 is a first sequence chart of an example method, to be performed by a display device, of evaluating content of an external device, according to various embodiments of the disclosure.
FIG. 7 is a second diagram illustrating an example method, to be performed by a display device, of evaluating content of an external device, according to various embodiments of the disclosure.
FIG. 8 is a third operational flowchart of an example method, to be performed by a display device, of evaluating content of an external device, according to various embodiments of the disclosure.
FIG. 9 is a second sequence chart of an example method, to be performed by a display device, of evaluating content of an external device, according to various embodiments of the disclosure.
FIG. 10 is a fourth operational flowchart of an example method, to be performed by a display device, of evaluating content of an external device, according to various embodiments of the disclosure.
FIG. 11 is a third diagram illustrating an example method, to be performed by a display device, of evaluating content of an external device, according to various embodiments of the disclosure.
FIG. 12 is a third sequence chart of an example method, to be performed by a display device, of evaluating content of an external device, according to various embodiments of the disclosure.
FIG. 13 is a fourth sequence chart of an example method, to be performed by a display device, of evaluating content of an external device, according to various embodiments of the disclosure.

### MODE OF DISCLOSURE

Throughout the disclosure, the expressions expression "at least one of a, b or c" and "at least one of a, b, and c" (or the like)" indicates only a, only b, only c, both a and b, both a and c, both b and c, all of a, b, and c, or variations thereof, and includes all combinations thereof.

Embodiments of the disclosure will be described in detail with reference to accompanying drawings.

Technological content well-known in the art or not directly related to the disclosure is omitted in the following description. Through the omission of content that might otherwise obscure the subject matter of the disclosure, the subject matter will be understood more clearly.

For at least similar reasons, some parts in the accompanying drawings are exaggerated, omitted, and/or schematically illustrated. The size of the respective elements may not fully reflect their actual size. Like numbers refer to like elements throughout the drawings.

Advantages and features of the disclosure, and methods for attaining them will be understood more clearly with reference to the following embodiments of the disclosure, which will be described in detail along with the accompanying drawings. The embodiments of the disclosure may, however, be embodied in many different forms and should not be construed as limited to the embodiments set forth herein; rather, these embodiments of the disclosure are provided so that this disclosure may be thorough and complete, and may convey the scope of the embodiments of the disclosure to those of ordinary skill in the art. Like numbers refer to like elements throughout the specification.

It may be understood that respective blocks and combinations of the blocks in processing flowcharts may be performed by computer program instructions. The computer program instructions may be loaded on a processor of a universal computer, a special-purpose computer, and/or other programmable data processing equipment, and, thus, the computer program instructions may generate means for performing functions described in the block(s) of the flowcharts if or when executed by the processor of the computer or other programmable data processing equipment. The computer program instructions may also be stored in computer-usable and/or computer-readable memories oriented for computers and/or other programmable data processing equipment, and as such, may allow for the manufacture of a product that contains instruction means for performing functions described in the block(s) of the flowchart. Alternatively or additionally, the computer program instructions may be loaded on computers and/or programmable data processing equipment, and as such, may allow for the instructions to generate a process executed by the computer and/or the other programmable data processing equipment to provide steps for performing functions described in the block(s) of the flowchart.

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time and/or in reverse order.

Furthermore, the term 'unit' or 'module' as herein used may refer to a software or hardware component, such as field programmable gate array (FPGA) or application specific integrated circuit (ASIC), which may play a certain role. However, the terms unit and module are not limited to software and/ or hardware. For example, a module may be configured to be stored in an addressable storage medium, and/or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a less number of components and modules, or further divided into a more number of components and modules. Moreover, the components and modules may be implemented to execute one or more central processing units (CPUs) in a device or security multimedia card. In embodiments of the disclosure, a module and/or unit may include one or more processors.

The terms "include (or including)" and "comprise (or comprising)", as used herein, are inclusive or open-ended and do not exclude additional, unrecited elements or method steps. The terms "unit", "module", "block", etc., as used herein each represent a unit for handling at least one function or operation, and may be implemented in hardware, software, or a combination thereof.

When A is said to "be connected" to B, it means to be "directly connected" to B or "electrically connected" to B with C located between A and C.

The expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. For example, in some situations, an expression "a system configured to do something" may refer to "an entity able to do something in cooperation with" another device or parts. For example, "a processor configured to perform A, B and C functions" may refer to a dedicated processor (e.g., an embedded processor) for performing A, B and C functions, or a general purpose processor (e.g., a Central Processing Unit (CPU)), or an application processor that may perform A, B and C functions by executing one or more software programs stored in a memory.

The disclosure will now be described with reference to accompanying drawings.

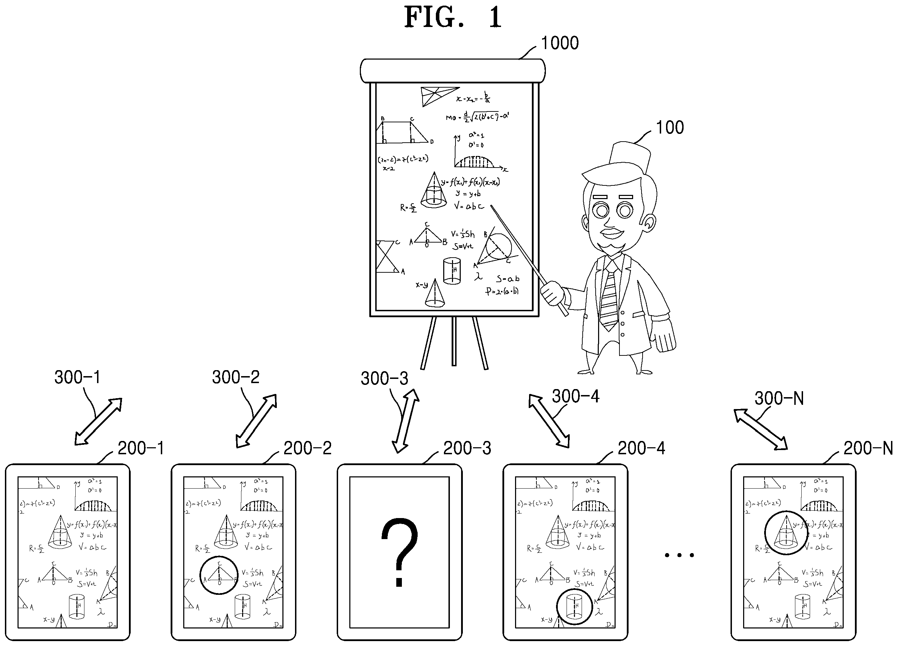

FIG. 1 illustrates a system for evaluating content of an external device, according to various embodiments of the disclosure.

Referring to FIG. 1, a system for evaluating content of an external device may include a display device 1000 and at least one external device (e.g., external devices 200-1 to 200-N, hereinafter 200).

The display device 1000 may refer to a device that operates to deliver visual information, and may include a display for providing visual information and/or a speaker for providing auditory information that may be provided with the visual information. The display device 1000 may also include an input module 1300 for receiving an input of a user 100 of the display device 1000. The visual information may include visual information contained in a still image, a graphic image, a video, and/or content made for a special purpose (e.g., content for education). The display device 1000 may include a television, a monitor, and/or an electronic bulletin board, without being limited thereto.

In some embodiments, the display device 1000 may transmit and/or receive certain content to and/or from the at least one external device 200. In other embodiments, the display device 1000 may receive and/or transmit the certain content at certain intervals. Alternatively or additionally, the display device 1000 may receive and/or transmit the certain content in response to an input of a user 100 of the display device 1000, and/or in response to an input of an external user of the at least one external device 200 (not shown).

In some embodiments, the display device 1000 may evaluate the certain content received from the at least one external device 200.

In some embodiments, the at least one external device 200 may be connected to the display device 1000 over one or more networks (e.g., 300-1 to 300-N, hereinafter 300). Alternatively or additionally, the at least one external device 200 may receive, through the network 300, the certain content from the display device 1000. In other embodiments, the at least one external device 200 may provide the certain content to the external user of the at least one external device 200. In other optional or additional embodiments, the at least one external device 200 may transmit, through the network 300, the certain content to the display device 1000. The at least one external device 200 may include, but is not exclusive to, a portable phone, a tablet, or a laptop computer.

The network 300 connecting the display device 1000 and the at least one external device 200 for communication may be implemented with a wired network, such as a local area network (LAN), a wide area network (WAN), or a value added network (VAN), and/or may be implemented with a wireless network, such as a mobile radio communication network or a satellite communication network. The network 300 may also include a combination of at least two of a LAN, a WAN, a VAN, a mobile radio communication network, or a satellite communication network. That is, the network 300 may be a comprehensive data communication network allowing the network constituent entities shown in FIG. 1 (e.g., display device 1000, at least one external device 200) to perform seamless communications with each other. In some embodiments, the network constituent entities of the network 300 may further include the cable Internet, the wireless Internet, and a mobile wireless communication network. In some embodiments, the wireless communication may include wireless LAN (e.g., Wireless-Fidelity (Wi-Fi)), Bluetooth, Bluetooth Low Energy (BLE), ZigBee, Wi-Fi Direct (WFD), ultra wideband (UWB), infrared data association (IrDA), near field communication (NFC), and the like, without being limited thereto.

FIG. 1 represents an embodiment where a user 100 (e.g., host) of the display device 1000 displays content to one more external users (e.g., participants) using the at least one external device 200. For example, the system environment shown in FIG. 1 may allow for a class to be conducted. The present disclosure is not limited in this regard, and may be used in other environments. Notably, the present disclosure may be employed in any environment in which displayed content needs to be analyzed and evaluated.

For example, the user 100 of the display device 1000 may be a teacher, and external users of the at least one external device 200 may be students. In such an example, to conduct the class, the teacher may display content related to the class in the display device 1000.

Alternatively or additionally, while the teacher conducts the class by displaying content related to the class in the display device 1000, the teacher may ask a question associated with the content displayed on the display device 1000 and/or gives a quiz. For example, the teacher may ask a question associated with the content displayed on the display device 1000 and/or utter speech asking a quiz.

In such an example, after obtaining the speech of the teacher (e.g., user 100), the display device 1000 may transmit current content to the at least one external device 200. The at least one external device 200 may display the content transmitted from the display device 1000. Alternatively or additionally, the at least one external device 200 may transmit (e.g., submit), to the display device 1000, content for submission (e.g., submission content) in response to obtaining input from the student. The submission content may be created based on the input of the student (e.g., external user) of the at least one external device 200 and may comprise an answer to the question and/or quiz of the teacher. The display device 1000 may identify an intent related to the teacher question and/or quiz based on analysis on the speech utterance of the teacher. Alternatively or additionally, the display device 1000 may evaluate an answer submitted by the student based on the identified intent.

For example, if or when the teacher asks the students to submit answers during the class, the teacher may utter a speech asking the students to submit answers.

In some embodiments of the disclosure, after obtaining the speech of the teacher (e.g., user 100), the display device 1000 may transmit the request to submit answers to the at least one external device 200. In response to receiving the request to submit answers, the at least one external device 200 may transmit an answer of the student if or when the answer of the student (e.g., submission content) is obtained (e.g., a corresponding student of the external device 200 provides an answer to the request from the teacher). For example, if or when receiving the request to submit answers, the at least one external device 200 may display a user interface (e.g., a pop-up window) that requests submission of an answer. In some embodiments, the display device 1000 may identify an intent related to the request based on analysis on the speech utterance of the teacher and evaluate answers submitted by the students based on the identified intent.

For another example, the teacher may intend to monitor a screen (e.g., display) of the at least one external device 200.

In such an example, the teacher and the student may be located in a same location and placed facing each other or the teacher and the student may be located in different spaces and/or locations (e.g., a remote class). Consequently, the teacher may be unable to see a screen of the at least one external device 200 of the student, and, as such, the teacher may be unable to see whether the screen of the at least one external device 200 is displaying content that is unrelated to the class, and/or the teacher may not be able to identify whether the student is using the at least one external device 200 for different purposes.

In some embodiments of the disclosure, at certain intervals set by the teacher and/or after obtaining an input (e.g., a monitoring request command) from the teacher, the display device 1000 may transmit a request to share a current screen to the at least one external device 200. Upon receiving the request to share the current screen, the at least one external device 200 may transmit the current screen displayed on the at least one external device 200 to the display device 1000. The display device 1000 may evaluate the content displayed on each of the at least one external device 200 based on the content displayed on the current screen of the at least one external device 200 and/or the content displayed on the display device 1000.

For example, the teacher may intend to use a screen of a particular external device 200 (e.g., 200-1) as material for the class, by sharing the content of the screen of the particular external device (e.g., 200-1) with the other students (e.g., displaying the screen of the particular external device 200 on a screen of the display device 1000).

In a situation in which the teacher and the student are placed facing each other and/or are located in different spaces and/or locations (e.g., a remote class), sharing of a screen of a student may be inappropriate if or when the student has content unrelated to the class displayed on the screen and/or is using the at least one external device 200 for different purposes.

In some embodiments of the disclosure, after obtaining an input (e.g., a monitoring request command) from the teacher, the display device 1000 may transmit a request to share a current screen to a particular external device 200 (e.g., 200-1). Upon receiving the request to share the current screen, the particular external device 200-1 may transmit the current screen displayed on the particular external device 200-1 to the display device 1000. The display device 1000 may evaluate the content displayed on each of the at least one external device 200 (e.g., 200-2 to 200-N) based on content displayed on the current screen of the particular external device 200-1 and/or based on content displayed on the display device 1000, to determine whether sharing the content is appropriate. The display device 1000 may not display the content if or when the display device 1000 has determined the content displayed on the current screen of the particular external device 200-1 as being improper for sharing as a result of determining whether the sharing is appropriate on the screen of the display device 1000. Alternatively or additionally, the display device 1000 may display the content if or when the display device 1000 has determined the content displayed on the current screen of the particular external device 200-1 as being proper for sharing as a result of determining whether the sharing is appropriate on the screen of the display device 1000.

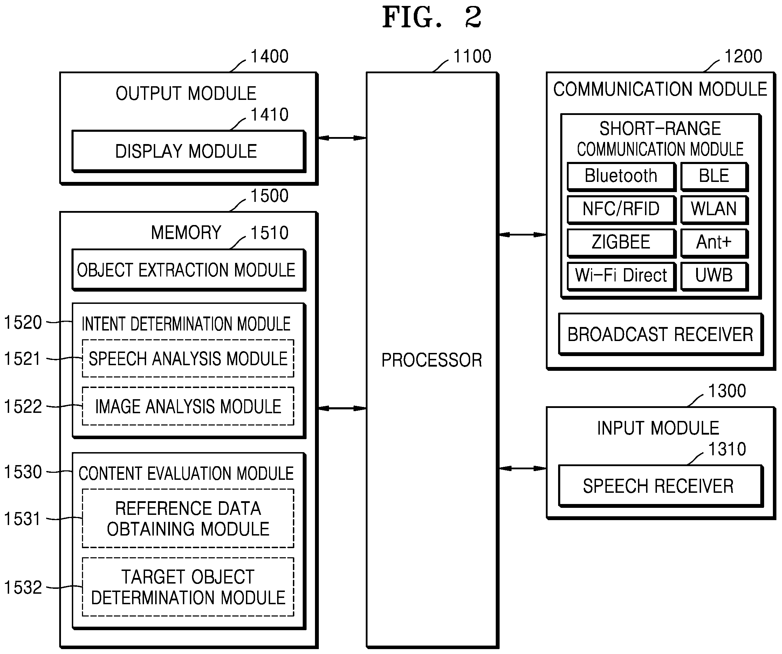

FIG. 2 is a block diagram of example components of a display device 1000, according to various embodiments of the disclosure.

Referring to FIG. 2, the display device 1000 may include a processor 1100, a communication module 1200, an input module 1300, an output module 1400, and a memory 1500. The number and arrangement of components shown in FIG. 2 are provided as an example. In practice, there may be additional components, fewer components, different components, or differently arranged components than those shown in FIG. 2. Furthermore, two or more components shown in FIG. 2 may be implemented within a single component, or a single component shown in FIG. 2 may be implemented as multiple, distributed components. Alternatively or additionally, a set of (one or more) components shown in FIG. 2 may perform one or more functions described as being performed by another set of components shown in FIG. 2.

The aforementioned components will now be described in detail.

The communication module 1200 may include at least one component that allows communication between the display device 1000 and a server device (not shown) and/or between the display device 1000 and an external device (e.g. external device 200 of FIG. 1, other communication device). For example, the communication module 1200 may include a short-range communication module and/or a broadcast receiver.

In some embodiments, the short-range communication module may include a Bluetooth communication module, a BLE communication module, an NFC and/or radio-frequency identification (RFID) communication module, a WLAN communication module (e.g., Wi-Fi), communication module, a ZigBee communication module, an IrDA communication module, a WFD communication module, an UWB communication module, a managed ANT (ANT+) communication module, and the like, without being limited thereto.

In some embodiments, the broadcast receiver may receive broadcast signals and/or broadcasting-related information from other communication devices on a broadcasting channel. For example, the broadcasting channel may include a satellite channel and/or a terrestrial channel, without being limited thereto. In other embodiments, the display device 1000 may not include the broadcast receiver.

The communication module 1200 may obtain content from an external device (e.g. server device, external device 200 of FIG. 1, other communication device). For example, the communication module 1200 may obtain content from the external device through wired and/or wireless communication. In some embodiments, the external device may include a server device, a mobile terminal, a wearable device (e.g., a watch, a band, glasses, a mask, etc.), a home appliance (e.g., a television, a desktop PC, a laptop, a notebook, a digital versatile disc (DVD) device, a washing machine, a refrigerator, etc.), or the like, without being limited thereto. Alternatively or additionally, the content obtained from the external device may include a multimedia file, a video file, an audio file, and the like.

The input module 1300 be configured to provide for the user 100 of the display device 1000 to enter data and/or commands to control the display device 1000. In some embodiments, the input module 1300 may include a key pad, a dome switch, a touch pad (e.g., capacitive, resistive, infrared detection type, surface acoustic wave type, integral strain gauge type, piezoelectric effect type), a jog wheel, a jog switch, and the like, without being limited thereto.

Alternatively or additionally, the input module 1300 may include a button module (including a power button), a brightness setting button, a reservation setting button, a mode change button, a volume control button, and the like, without being limited thereto.

In other embodiments, the input module 1300 may include a speech receiver 1310 for receiving a speech input of the user 100. For example, the speech receiver 1310 may include at least one microphone (not shown). The speech receiver 1310 may process external acoustic signal, that may have been received from outside of the display device 1000, into electric speech data. For example, the microphone may receive an acoustic signal (e.g., a voice command) from an external device (e.g. a speaker) and/or the user 100. In other embodiments, the speech receiver 1310 may employ various noise-cancellation algorithms to reduce noise generated in the course of receiving and/or processing the external acoustic signal.

The output module 1400 may be configured to output an audio signal and/or a video signal. For example, the output module 1400 may include a plurality of speakers (not shown). Alternatively or additionally, the output module 1400 may include a display module 1410.

If or when the display module 1410 and a touch pad are implemented in a layered structure to constitute a touch screen, the display module 1410 may also be used as an input device in addition to the output device. The display module 1410 may include at least one of a liquid crystal display, a thin film transistor-liquid crystal display, organic light-emitting diodes (OLEDs), a flexible display, a three dimensional (3D) display, or an electrophoretic display. Furthermore, depending on the form of implementation of the display device 1000, the display device 1000 may include two or more display modules 1410.

The output module 1400 may output audio data received from the communication module 1200 and/or stored in the memory 1500. For example, the output module 1400 may output a stereo acoustic signal. That is, the plurality of speakers of the output module 1400 may be implemented with at least one of a right channel speaker, a left channel speaker, and/or a mono channel speaker. Alternatively or additionally, the output module 1400 may output an acoustic signal related to a function performed by the display device 1000 (e.g., a notification sound, or a guide voice).

The memory 1500 may store a program to be executed by the processor 1100, which will be described later. The memory 1500 may store a program that includes at least one instruction to control operation of the display device 1000.

Instructions and program codes that may be readable to the processor 1100 may be stored in the memory 1500. In some embodiments, the processor 1100 may be implemented to execute the instructions and/or codes of the program stored in the memory 1500. The memory 1500 may store data to be input to the display device 1000 and/or data output from the display device 1000.

In some embodiments, the memory 1500 may include at least one type of storage medium including, for example, a flash memory, a hard disk, a multimedia card micro type memory, a card type memory (e.g., a secure digital (SD) memory card, an extreme digital (XD) memory card), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, and the like, without being limited thereto.

The program stored in the memory 1500 may be classified into multiple modules based on their function. For example, the memory 1500 may include an object extraction module 1510, an intent determination module 1520, and a content evaluation module 1530. The intent determination module 1520 may include a speech analysis module 1521 and an image analysis module 1522. The content evaluation module may include a reference data obtaining module 1531 and a target object determination module 1532.

The processor 1100 may control general operation of the display device 1000. The processor 1100 may perform operations according to some embodiments of the disclosure. For example, the processor 1100 may execute programs stored in the memory 1500 to generally control the communication module 1200, the input module 1300, the output module 1400, etc.

The processor 1100 may include hardware components for performing arithmetic, logical, and input/output operations and signal processing. The processor 1100 may include at least one of central processing units (CPUs), microprocessors, graphic processing units (GPUs), application specific integrated circuits (ASIC), digital signal processors (DSPs), digital signal processing devices (DSPDs), programmable logic devices (PLDs), field programmable gate arrays (FPGAs), and the like, without being limited thereto.

In some embodiments of the disclosure, the processor 1100 may include an artificial intelligence (AI) processor (not shown) for building up a learning network model, without being limited thereto. In some embodiments of the disclosure, the AI processor may be implemented in a separate chip from the processor 1100. In some embodiments of the disclosure, the AI processor may be a universal chip.

In some embodiments of the disclosure, the processor 1100 may execute the at least one instruction stored in the memory 1500 to determine an intent of the user 100 based on a result of interpreting a speech input of the user 100 obtained through the speech receiver 1310, obtain reference data based on the intent of the user 100, determine at least one target object to be compared with the reference data from among objects included in content submitted by an external device 200 connected to the display device 1000, which may be received through the communication module 1200, and evaluate the submission content by comparing the at least one target object with the reference data.

In some embodiments of the disclosure, the processor 1100 may further execute the at least one instruction stored in the memory 1500 to determine a plurality of object sets included in pieces of content received from a plurality of external devices 200-1 to 200-N connected to the display device 1000 through the communication module 1200, determine an intent of the user 100 based on a result of interpreting the plurality of object sets, and evaluate each of the plurality of pieces of content based on the intent of the user 100.

In some embodiments of the disclosure, the processor 1100 may further execute at least one instruction of the object extraction module 1510 among the programs stored in the memory 1500 to extract an object included in submission content received from an external device 200 and an object included in reference content to be shared by the display device 1000 with the external device 200.

In some embodiments of the disclosure, the processor 1100 may further execute at least one instruction of the intent determination module 1520 among the programs stored in the memory 1500 to determine an intent of the user 100 based on a result of speech analysis on a speech input of the user 100 and a result of image analysis on images included in the reference content and the submission content.

In some embodiments of the disclosure, the processor 1100 may further execute at least one instruction of the speech analysis module 1521 among the programs stored in the memory 1500 to interpret a speech input of the user 100 received from the speech receiver 1310.

In some embodiments, the speech analysis module 1521 may use AI technology and/or rule-based natural language understanding (NLU), to understand an intention included in the speech input of the user 100.

The speech analysis module 1521 may use utterance data and/or operations corresponding to the utterance data to determine an intent of the user 100. The speech analysis module 1521 may build up and/or update a user intent determination model determined based on speech input interpretation.

The utterance data may be related to a speech uttered by the user 100 to evaluate the content, representing an utterance of the user 100. The utterance data may be used to interpret the intent of the user 100 related to an operation of the display device 1000. The utterance data may include at least one of an utterance sentence in the form of text, and an utterance parameter having the form of an output value of an NLU model. The utterance parameter may be data output from the NLU model, which may include an intent and a parameter. The intent may be information determined by interpreting text using the NLU model, and may indicate an intent of the utterance of the user 100. For example, the intent may be information indicating a device operation intended by the user 100. The intent may include the information indicating the intent of the utterance of the user 100 (hereinafter, intent information). Alternatively or additionally, the intent may include a numerical value corresponding to the information indicating the intent of the user 100. The numerical value may indicate a probability of the text being related to information indicating a particular intent. If or when there are a plurality of pieces of information indicating the intent of the user 100 as a result of interpreting the text using the NLU model, one of the plurality of pieces of intent information which has the highest numerical value may be determined as the intent. Furthermore, the parameter may be variable information for determining detailed operations of the device related to the intent. The parameter may be information relating to the intent, and there may be multiple types of parameters corresponding to an intent. The parameter may include the variable information for determining operation information of the device. Alternatively or additionally, the parameter may include a numerical value indicating a probability of the text being related to the variable information. That is, a plurality of pieces of variable information indicating the parameter may be obtained as a result of interpreting the text using the NLU model. In some embodiments, one of the plurality of pieces of variable information, which has the highest numerical value corresponding to the variable information, may be determined to be the parameter.

In some embodiments of the disclosure, the processor 1100 may execute at least one instruction of the image analysis module 1522 among the programs stored in the memory 1500 to interpret images contained in the reference content and/or the submission content based on objects extracted by the object extraction module 1510.

In some embodiments, the image analysis module 1522 may use AI technology and/or a deep-learning-based image analysis technology, to understand an intent of the user 100.

In some embodiments, the image analysis module 1522 may extract and analyze objects contained in the content displayed on the display device 1000 and the content received from the at least one external device 200, by analyzing the content displayed on the display device 1000 and the content received from the at least one external device 200.

The image analysis module 1522 may identify an object, a place, a person, text, an image, and the like, from an image through image recognition. Alternatively or additionally, the image analysis module 1522 may classify an image and detect an object based on a result of the image recognition.

In some embodiments, the image analysis module 1522 may classify an image using a classification model. The classification model may use an AI technology that may include a discriminative model and/or a generative model. The generative model may calculate a probability of deriving a result from the input data based on distributions of classes.

In some embodiments, the image analysis module 1522 may use a bounding box and/or a class probability map and/or grid to detect an object. In such embodiments, the image analysis module 1522 may obtain coordinates and/or a size of an object to be detected.

If or when a single object is contained in an image, object extraction may include classifying and/or localizing the object contained in the image. Alternatively or additionally, if or when multiple objects are contained in an image, object extraction may include classifying, detecting, and/or segmenting the objects contained in the image.

The classifying operation may refer to classifying a type according to a defined class by recognizing a single image that has the most importance from a sheet of images. The object detection operation may refer to obtaining type and location information of each object in the form of a rectangular box, for example, by classifying a property and class of each object if or when several objects are contained in the single image. The segmenting operation may refer to displaying the shape of an object detected by the objection detection in pixels. Alternatively or additionally, the segmenting operation may include a procedure of extracting an outline of the object.

In some embodiments, the image analysis module 1522 may determine an intent of the user 100 based on a result of analyzing objects contained in the content displayed on the display device 1000 and/or the content received from at least one external device 200. Alternatively or additionally, the image analysis module 1522 may build up and/or update a user intent determination model based on the object analysis.

In some embodiments, the image analysis module 1522 may determine at least one category of each object contained in the content displayed on the display device 1000 and/or the content received from the at least one external device 200, based on classification of each object contained in the content displayed on the display device 1000 and/or the content received from the at least one external device 200. In some embodiments, the categories in the at least one category may have a hierarchical relationship with each other.

The intent information may be determined based on the category of an object obtained from an image analysis result, which may represent an intention of the user 100 of the display device 1000 to use the display device 1000. Alternatively or additionally, the intent information may represent pieces of content and/or subject to be conveyed to the external user of the at least one external device 200.

For example, objects contained in the content displayed on the display device 1000 and/or the content received from the at least one external device 200 may be detected, and then a category to which most objects belong may be determined as a category related to the intent of the user 100 based on the classification of the objects.

For example, if or when the content displayed on the display device 1000 contains many objects related to the universe, the image analysis module 1522 may determine 'science' as a category and 'earth science' as a sub-category of the objects contained in the content displayed on the display device 1000. Furthermore, if or when the content received from a particular external device 200 contains many objects related to elements, the image analysis module 1522 may determine 'science' as a category and 'chemistry' as a sub-category of the objects contained in the content received from the external device 200.

In some embodiments of the disclosure, the speech analysis module 1521 and/or the image analysis module 1522 may be included in a separate server.

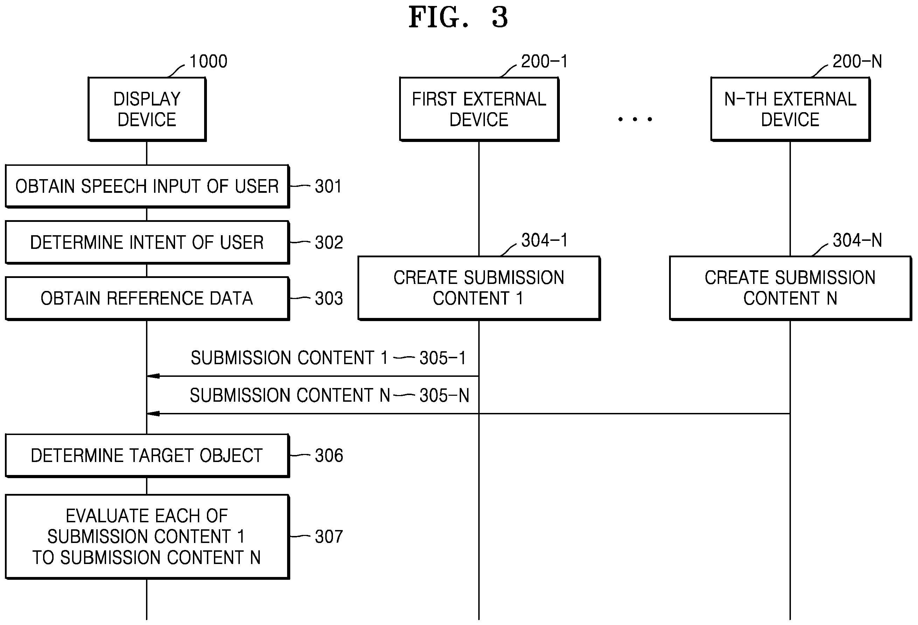

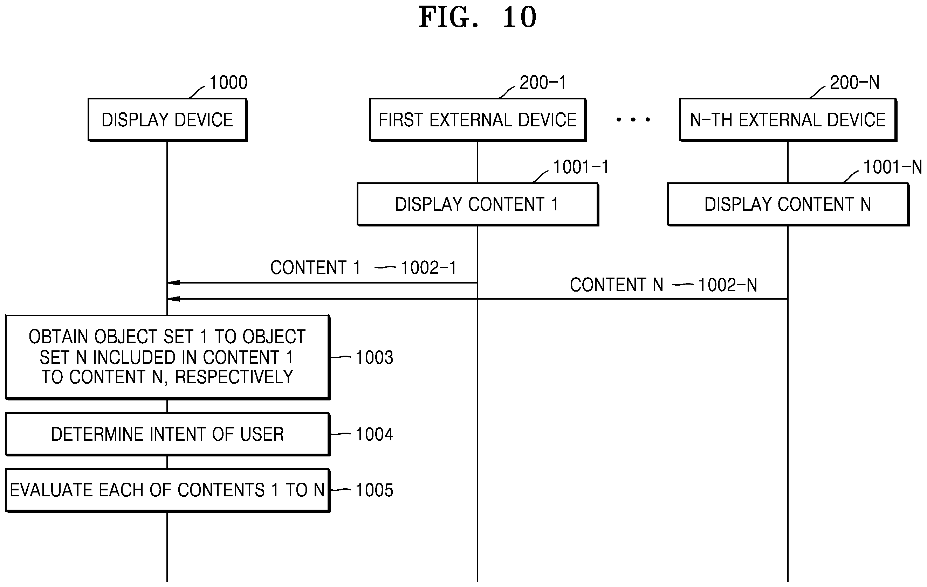

An example method of determining an intent of the user 100 based on a result of analyzing a user speech received from the speech receiver 1310 will be described in reference to FIGS. 3 to 9. An example method of determining an intent of the user 100 based on a result of image analysis on an image contained in the reference content or submission content based on objects extracted by the object extraction module 1510 will be described in reference to FIGS. 10 to 13.

In some embodiments of the disclosure, the processor 1100 may execute at least one instruction of the content evaluation module 1530 among the programs stored in the memory 1500 to evaluate submission content based on a result of comparing the reference data with a target object.

In some embodiments of the disclosure, the processor 1100 may execute at least one instruction of the reference data obtaining module 1531 among the programs stored in the memory 1500 to obtain reference data based on the intent of the user 100 determined by the intent determination module 1520. Furthermore, in some embodiments of the disclosure, the processor 1100 may execute at least one instruction of the target object determination module 1532 among the programs stored in the memory 1500 to determine a target object to be compared with the reference data determined by the reference data obtaining module 1531.

An example method of obtaining the reference data and an example method of determining a target object will be described in reference to FIGS. 3 to 13.

FIG. 3 is an operational flowchart of an example method, to be performed by a display device 1000, of evaluating content of an external device 200, according to various embodiments of the disclosure.

Referring to FIG. 3, a system in which a display device evaluates content of an external device may include the display device 1000 and the at least one external device 200.

The system for evaluating content of an external device depicted in FIG. 3 may be similar in many respects to the architecture of the systems and devices described above in reference to FIGS. 1 and 2, and may include additional features not mentioned above. Some descriptions of the elements of the systems and devices described above may have been omitted, or may be briefly described, in the interest of clarity and conciseness.

The display device 1000 may be a device configured to deliver visual information. The display device 1000 may transmit and/or receive certain content to and/or from the at least one external device 200 through the network 300. Alternatively or additionally, the display device 1000 may evaluate the certain content received from the at least one external device 200.

In some embodiments, the at least one external device 200 may be connected to the display device 1000 over network 300. Consequently, the at least one external device 200 may receive, through the network 300, certain content from the display device 1000. In other embodiments, the at least one external device 200 may provide the certain content to the external user of the at least one external device 200. In other optional or additional embodiments, the at least one external device 200 may transmit, through the network 300, certain content to the display device 1000.

The display device 1000 and the at least one external device 200 may be connected over a network 300, as shown in FIG. 1.

In operation 301, the display device 1000 may obtain a speech input of the user 100 of the display device 1000.

In some embodiments of the disclosure, a speech of the user 100 of the display device 1000 may be received through the input module 1300 (e.g., the speech receiver 1310) of the display device 1000. In some embodiments of the disclosure, the speech input of the user 100 may be a speech of the user 100 of the display device 1000 recognized through speaker recognition from a plurality of user speech inputs entered to the display device 1000.

The speaker recognition operation may comprise recognizing a speaker by analyzing received voice to distinguish a user 100 and comparing the received voice with voice information of users stored in advance. For example, in an environment, such as a classroom or a conference room, in which multiple users speak, if or when speeches of the multiple users are received simultaneously, the display device 1000 may only use a speech of the user 100 of the display device 1000 that has been recognized through speaker recognition from among the speeches of the multiple users.

In operation 302, the display device 1000 may determine an intent of the user 100 based on a result of interpreting the speech input of the user 100.

In some embodiments of the disclosure, the received speech input of the user 100 may be interpreted using the speech analysis module 1521 and/or an external server.

The intent of the user 100 may be determined by interpreting text corresponding to the speech input using the NLU model, and may indicate an utterance purpose of the speech input.

The intent of the user 100 may be determined using object recognition to interpret an object contained in the content, which may represent a purpose of the user 100 of the display device 1000 to use the display device 1000. Alternatively or additionally, the intent of the user 100 may represent pieces of content and/or a subject to be conveyed to the external user of the at least one external device 200-1 to 200-N.

In some embodiments of the disclosure, the intent of the user 100 may be information indicating an operation intended by the user 100 of the display device 1000, such as an operation of the display device 1000 and/or an operation of the external device 200. In some embodiments of the disclosure, the intent of the user 100 may include at least one of an intention contained in the speech of the user 100, whether there is an instruction, a type of the instruction, and a subject of the content.

In some embodiments of the disclosure, the display device 1000 may be configured to receive a speech input, analyze the speech input in real time, and remain in a ready state if or when the display device 1000 has determined from a speech analysis result that no instruction (e.g., an instruction word, a suggestion, a requesting word, etc.) is included in the speech input of the user 100. Alternatively or additionally, the display device 1000 may perform an operation if or when the display device 1000 has determined that a certain instruction is included in the speech input of the user 100.

In operation 303, the display device 1000 may obtain reference data based on the intent of the user 100.

For example, if or when the intent of the user 100 is to share the reference content with the at least one external device 200, and to receive and evaluate content submitted from the at least one external device 200, the display device 1000 may determine a correctly answered object from among objects extracted from the reference content as reference data.

In such an example, the reference content may be content shared by the display device 1000 with the at least one external device 200, and the display device 1000 may transmit the reference content to the at least one external device 200 before operation 304.

In another example, if or when the intent of the user 100 is to evaluate the submission content received from the at least one external device 200 without the reference content, the display device 1000 may determine data belonging to a certain category determined based on a keyword included in the speech input of the user 100 as the reference data. In such an example, the reference data may be selected from among data included in a database which may be located in the display device 1000 and/or an external server.

In operation 304, the at least one external device 200 may create content for submission (e.g., submission content 1 to submission content N).

In operation 304-1, the first external device 200-1 may create submission content 1 based on an input of the external user of the first external device 200-1 corresponding to a speech uttered by the user 100 of the display device 1000.

In operation 304-N, the N-th external device 200-N may create submission content N based on an input of the external user of the N-th external device 200-N corresponding to the speech uttered by the user 100 of the display device 1000.

For example, if or when the intent of the user 100 is to share the reference content with the at least one external device 200, and to receive and evaluate the submission content from the at least one external device 200, the submission content (e.g., submission content 1 to submission content N) may be content obtained by adding a certain input to the reference content.

In another example, if or when the intent of the user 100 is to evaluate submission content (e.g., submission content 1 to submission content N) received from the at least one external device 200 without the reference content, the submission content (e.g., submission content 1 to submission content N) may be inputs themselves of external users of the external devices 200.

In operation 305, the at least one external device 200 may transmit the submission content (e.g., submission content 1 to submission content N) to the display device 1000.

In some embodiments of the disclosure, in operation 305-1, the first external device 200 may transmit the submission content 1 to the display device 1000, and in operation 305-N, the N-th external device 200 may transmit the submission content N to the display device 1000.

In operation 306, the display device 1000 may determine at least one target object to be compared with the reference data from among objects contained in the submission content (e.g., submission content 1 to submission content N).

For example, if or when the intent of the user 100 is to share the reference content with the at least one external device 200 and to receive and evaluate the submission content (e.g., submission content 1 to submission content N) from the at least one external device 200, the target object may be an object to which an input of the user 100 is added, among objects contained in each submission content (e.g., submission content 1 to submission content N).

In another example, if or when the intent of the user 100 is to evaluate the submission content (e.g., submission content 1 to submission content N) received from the at least one external device 200 without the reference content, the target object may be all the objects contained in the submission content (e.g., submission content 1 to submission content N).

In operation 307, the display device 1000 may evaluate each submission content (e.g., submission content 1 to submission content N) received by comparing the reference data with the at least one target object.

In some embodiments of the disclosure, the display device 1000 may send information about the content evaluation to at least one of the at least one external device 200.

In some embodiments of the disclosure, the display device 1000 may obtain a score for a result of a comparison between the at least one target object and the reference data. Alternatively or additionally, the display device 1000 may send information about the content evaluation to at least one of the at least one external device 200 if or when the score for the result of the comparison is equal to or less than a certain threshold.

In some embodiments of the disclosure, the display device 1000 and/or the at least one external device 200 may display the information about the content evaluation on the display module 1410 so that the external user of each external device 200 may check the content evaluation result.

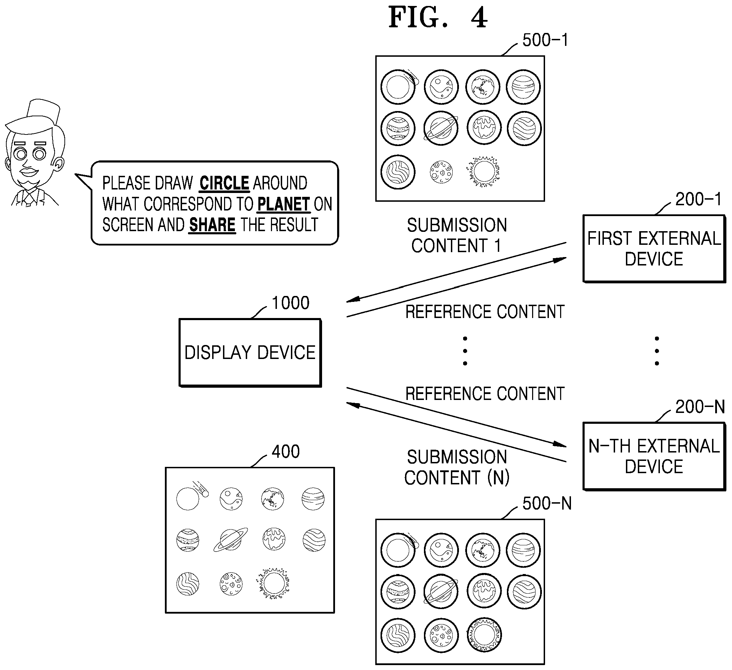

FIG. 4 is a diagram illustrating an example method, to be performed by a display device 1000, of evaluating content of an external device 200, according to various embodiments of the disclosure.

Referring to FIG. 4, the user 100 of the display device 1000 may utter a speech including a certain instruction for the external user of the at least one external device 200, and share reference content 400 using the display device 1000.

For example, if or when a teacher (e.g., the user 100 of the display device 1000,) utters a speech, such as, "please draw a circle around what corresponds to a planet on the screen and share the result", the speech receiver 1310 of the display device 1000 may obtain the speech input of the user 100 of the display device 1000. In this case, the reference content 400 may be an image containing an object corresponding to a planet.

After obtaining the speech input, the display device 1000 may use the speech analysis module 1521 of the intent determination module 1520 to interpret the speech input of the user 100. In other embodiments of the disclosure, the display device 1000 may send the speech input to an external server and obtain a result of speech input interpretation from the external server.

In some embodiments, the intent determination module 1520 may determine an intent of the user 100 based on the result of speech input interpretation. The intent may be information determined by interpreting text corresponding to the speech input using the NLU model, and may indicate an utterance purpose of the speech input.

The intent of the user 100 may be information indicating an operation intended by the user 100 of the display device 1000, such as an operation of the display device 1000 and/or an operation of the external device 200. In some embodiments of the disclosure, the intent of the user 100 may include at least one of an utterance purpose contained in the speech of the user 100, whether there is an instruction, a type of the instruction, and a subject of the content.

In some embodiments shown in FIG. 4, the intent of the user 100 of the display device 1000 may be to 'receive' and 'evaluate' results (e.g., submission content 500-1 to submission content 500-N, hereinafter submission content 500) of students (e.g., the external users of the at least one external device 200) drawing a circle around an object corresponding to a `planet' among a plurality of objects contained in the reference content 400 shared by the display device 1000.

That is, the utterance intent contained in the user speech may be to 'receive' and 'evaluate' the submission content 500, and the user speech 'includes' an instruction having a purpose to 'mark' on the reference content 400 shared by the display device 1000 and 'submit (share)' the result.

In some embodiments of the disclosure, the display device 1000 may monitor a speech input of the user 100 of the display device 1000, and/or update the intent of the user 100 at certain intervals.

In some embodiments of the disclosure, the display device 1000 may operate to interpret the speech input of the user 100 if or when a certain keyword is included in the speech input of the user 100.

In some embodiments shown in FIG. 4, the display device 1000 may take an instruction word contained in the speech uttered by the user 100 (e.g., a speech input 'please do') as a trigger to start interpreting the speech input of the user 100 that is being monitored. That is, the display device 1000 may determine the intent of the user 100 by interpreting the speech input from a certain time before receiving an instruction word (e.g., a monitoring period) to a time when the instruction word is received. For example, if or when a monitoring period is 10 seconds and the instruction word of the user 100 of the display device 1000 is received at 12:05:30, the display device 1000 may determine the intent of the user 100 by interpreting a speech input of the user 100 from 12:05:20 to 12:05:30. In some embodiments, the monitoring period may be set in the display device 1000. Alternatively or additionally, the monitoring period may be set by the user 100 of the display device 1000.

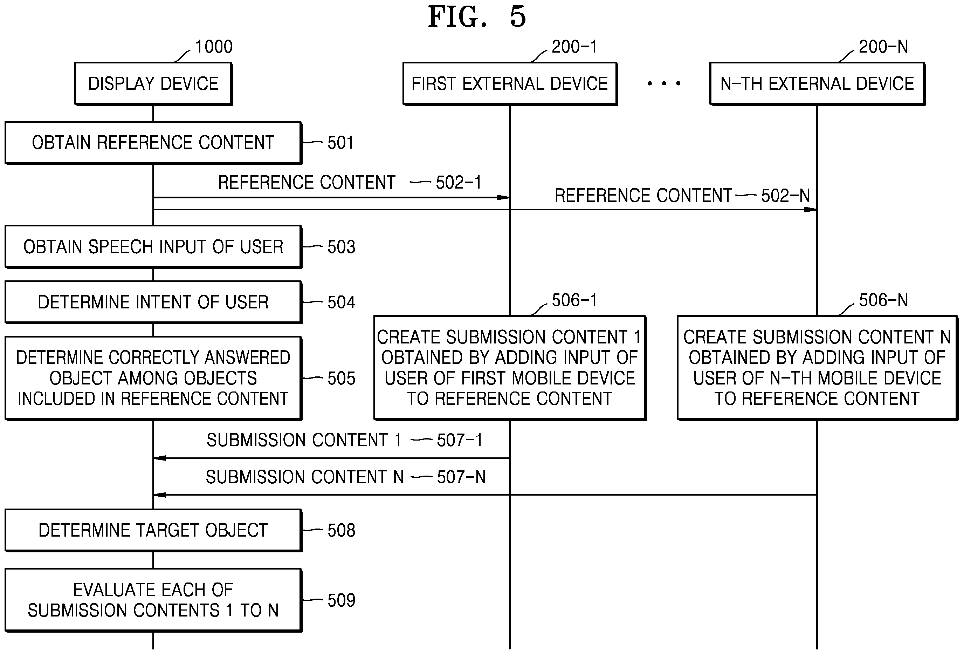

FIG. 5 is an operational flowchart of an example method, to be performed by a display device 1000, of evaluating content of an external device 200, according to various embodiments of the disclosure.

Referring to FIG. 5, a system in which a display device evaluates content of an external device may include the display device 1000 and the at least one external device 200.

The system for evaluating content of an external device depicted in FIG. 5 may be similar in many respects to the architecture of the systems and devices described above in reference to FIGS. 1-3, and may include additional features not mentioned above. Some descriptions of the elements of the systems and devices described above may have been omitted, or may be briefly described, in the interest of clarity and conciseness.

In operation 501, the display device 1000 may obtain reference content.

In operation 502, the display device 1000 may transmit (e.g., share) the reference content 502-1 to 502-N to (with) the at least one external device 200

In operation 503, the display device 1000 may obtain a speech input of the user 100 of the display device 1000.

In some embodiments of the disclosure, a speech of the user 100 of the display device 1000 may be received through an input module 1300 of the display device 1000. In some embodiments of the disclosure, the speech input of the user 100 may be a speech of the user 100 of the display device 1000 recognized through speaker recognition from a plurality of user speech inputs entered to the display device 1000.

In operation 504, the display device 1000 may determine an intent of the user 100 based on a result of interpreting the speech input of the user 100.

In some embodiments of the disclosure, the received speech input of the user 100 may be interpreted using the speech analysis module 1521 of the display device 1000 and/or an external server. The intent may be information determined by interpreting text corresponding to the speech input using the NLU model, and may indicate an utterance purpose of the speech input.

Referring to FIG. 4, if or when the result of interpreting the speech input of the user 100 indicates that there is an 'instruction' to 'share' a result of drawing a `circle' around what corresponds to a 'planet' among objects contained in the reference content, main information for determining the intent of the user 100 may be the `planet', 'circle', `share', and 'instruction'.

Referring again to FIG. 5, in operation 505, the display device 1000 may obtain reference data based on the intent of the user 100.

For example, if or when the intent of the user 100 is to share the reference content with the at least one external device 200, and to receive and evaluate content submitted from the at least one external device 200, the display device 1000 may determine a correctly answered object from among objects extracted from the reference content as reference data.

Referring to FIG. 4, the reference content may contain sixteen objects, and the display device 1000 may determine, based on the intent of the user 100, that nine objects may be correctly answered objects. For example, the nine correctly answered objects may correspond to 'Mercury', 'Venus', 'Earth', `Mars', 'Jupiter', Saturn', 'Uranus', 'Neptune', and 'Pluto'.

Referring again to FIG. 5, in operation 506, the at least one external device 200 may create content for submission (e.g., submission content 507-1 to submission content 507-N).

Each external device of the at least one external device 200 may create the submission content (e.g., submission content 507-1 to submission content 507-N) based on inputs of the external user of the at least one external device 200 corresponding to a speech uttered by the user 100 of the display device 1000.

For example, if or when the intent of the user 100 is to share the reference content with the at least one external device 200, and to receive and evaluate the submission content from the at least one external device 200, the submission content (e.g., submission content 507-1 to submission content 507-N) may be content obtained by adding a certain input to the reference content.

In operation 507, the at least one external device 200 may transmit the submission content (e.g., submission content 507-1 to submission content 507-N) to the display device 1000.

In operation 508, the display device 1000 may determine at least one target object to be compared with the reference data from among objects contained in the submission content (e.g., submission content 507-1 to submission content 507-N).

For example, if or when the intent of the user 100 is to share the reference content with the at least one external device 200, and to receive and evaluate the submission content from the at least one external device 200, the target object may be an object to which an input of the user 100 is added, among objects contained in each submission content (e.g., submission content 507-1 to submission content 507-N).

According to some embodiments of the disclosure, the certain input may be determined based on the intent of the user 100. For example, if or when the user 100 of the display device 1000 intends a `circle' as a way to mark, the display device 1000 may determine an object to which a `circle' is added by way of an input of the user 100 from among the objects contained in each submission content (e.g., submission content 507-1 to submission content 507-N) as a target object.

Referring to FIG. 4, the target object of the first external device 200 may include a total of nine objects with a circle input thereto (i.e., 'Mercury', 'Venus', 'Earth', `Mars', 'Jupiter', Saturn', 'Uranus', 'Neptune', and 'Pluto') among objects contained in the submission data 500-1. Alternatively or additionally, the target object of the N-th external device 200 may include a total of ten objects with a circle input thereto (i.e., 'Mercury', 'Venus', 'Earth', 'Mars', 'Jupiter', Saturn', 'Uranus', 'Neptune', 'Pluto', and "moon') among objects contained in the submission data 500-N. In some embodiments, the submission data 500-1 of FIG. 4 may correspond to the submission content 507-1 of FIG. 5, and/or the submission data 500-N of FIG. 4 may correspond to the submission content 507-N of FIG. 5.

Referring again to FIG. 5, in operation 509, the display device 1000 may evaluate each received submission content by comparing the reference data with the at least one target object.

In some embodiments of the disclosure, the processor 1100 of the display device 1000 may provide (e.g., feed back) information about the content evaluation to at least one external device of the at least one external device 200.

In some embodiments of the disclosure, the processor 1100 of the display device 1000 may obtain a score for a result of a comparison between the at least one target object and the reference data, and feed back information about the content evaluation to at least one external device of the at least one external device 200 if or when the score for the result of the comparison is equal to or less than a certain threshold.

In some embodiments of the disclosure, the processor 1100 of the display device 1000 may output the information about the content evaluation on the output module 1400 of the display device 1000. For example, the display device 1000 may display the information about the content evaluation on the display module 1410 of the display device 1000.

In other embodiments of the disclosure, the processor 1100 of the display device 1000 may obtain a score for a result of a comparison between the at least one target object and the reference data, and display the information about the content evaluation on the display module 1410 of the display device 1000 if or when the score for the result of the comparison is equal to or less than a certain threshold.

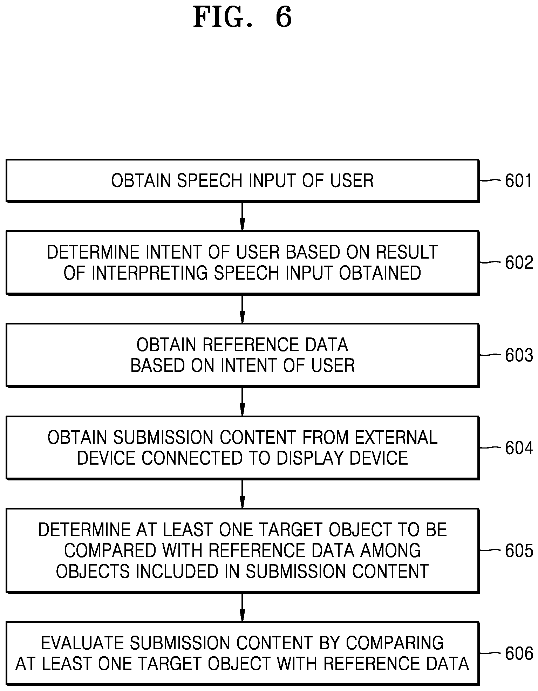

FIG. 6 is a sequence chart of an example method, to be performed by a display device 1000, of evaluating content of an external device 200, according to various embodiments of the disclosure.

Referring to FIG. 6, the display device 1000 may be a device configured to deliver visual information. The display device 1000 may transmit and/or receive certain content to and/or from the at least one external device 200 through the network 300. Alternatively or additionally, the display device 1000 may evaluate the certain content received from the external device 200.

The system for evaluating content of an external device depicted in FIG. 6 may be similar in many respects to the architecture of the systems and devices described above in reference to FIGS. 1-5, and may include additional features not mentioned above. Some descriptions of the elements of the systems and devices described above may have been omitted, or may be briefly described, in the interest of clarity and conciseness.

In operation 601, the display device 1000 may obtain a speech input of the user 100 of the display device 1000.

In some embodiments of the disclosure, a speech of the user 100 of the display device 1000 may be received through the input module 1300 of the display device 1000. In some embodiments of the disclosure, the speech input of the user 100 may be a speech of the user 100 of the display device 1000 recognized through speaker recognition from a plurality of user speech inputs entered to the display device 1000.

In operation 602, the display device 1000 may determine an intent of the user 100 based on a result of interpreting the speech input of the user 100.

In some embodiments of the disclosure, the received speech input of the user 100 may be interpreted using the speech analysis module 1521 and/or an external server. The intent may be information determined by interpreting text corresponding to the speech input using the NLU model, and may indicate an utterance purpose of the speech input.

In some embodiments of the disclosure, the intent of the user 100 may be information indicating an operation intended by the user 100 of the display device 1000, such as an operation of the display device 1000 and/or an operation of the external device 200. In some embodiments of the disclosure, the intent of the user 100 may include at least one of an intention contained in the speech of the user 100, whether there is an instruction, a type of the instruction, and a subject of the content.

In some embodiments of the disclosure, the display device 1000 may be configured to receive a speech input, analyze the speech input in real time, and remain in a ready state if or when the display device 1000 has determined from a speech analysis result that no instruction (e.g., an instruction word, a suggestion, a requesting word, etc.) is included in the speech input of the user 100. Alternatively or additionally, the display device 1000 may perform an operation if or when the display device 1000 has determined that a certain instruction is included in the speech input of the user 100.

In operation 603, the display device 1000 may obtain reference data based on the intent of the user 100.

In some embodiments of the disclosure, if or when the intent of the user 100 is to share the reference content with an external device 200, and to receive and evaluate content submitted from the external device 200, the display device 1000 may determine a correctly answered object as reference data from among objects extracted from the reference content.

In such embodiments, the reference content may be content shared by the display device 1000 with the external device 200, and the display device 1000 may transmit the reference content to the external device 200 before the external device 200 creates content for submission (e.g., submission content 507-1 to 507N of FIG. 5).

In operation 604, the display device 1000 may obtain the submission content from the external device 200 connected to the display device 1000.

In some embodiments of the disclosure, the external device 200 may transmit the submission content to the display device 1000, and the display device 1000 may receive the submission content from the external device 200.

In some embodiments of the disclosure, if or when the intent of the user 100 is to share the reference content with an external device 200, and to receive and evaluate submission content from the external device 200, the submission content may be content obtained by adding a certain input to the reference content.

In operation 605, the display device 1000 may determine at least one target object to be compared with the reference data from among objects contained in the submitted content.

For example, if or when the intent of the user 100 is to share the reference content with an external device 200, and to receive and evaluate content submitted from the external device 200, the target object may be an object to which an input of the user 100 is added, among objects contained in the submission content 305.

In operation 606, the display device 1000 may evaluate the received submission content by comparing the reference data with the at least one target object.

In some embodiments of the disclosure, the display device 1000 may send information about the content evaluation to the external device 200.

In some embodiments of the disclosure, the display device 1000 may obtain a score for a result of a comparison between the at least one target object and the reference data. Alternatively or additionally, the display device 1000 may send the information about the content evaluation to the external device 200 if or when the score for the result of the comparison is equal to or less than a certain threshold.

In some embodiments of the disclosure, the display device 1000 and/or the external device 200 may display the information about the content evaluation in a display module (e.g., display module 1410) so that the external user of each external device 200 may check the content evaluation result.

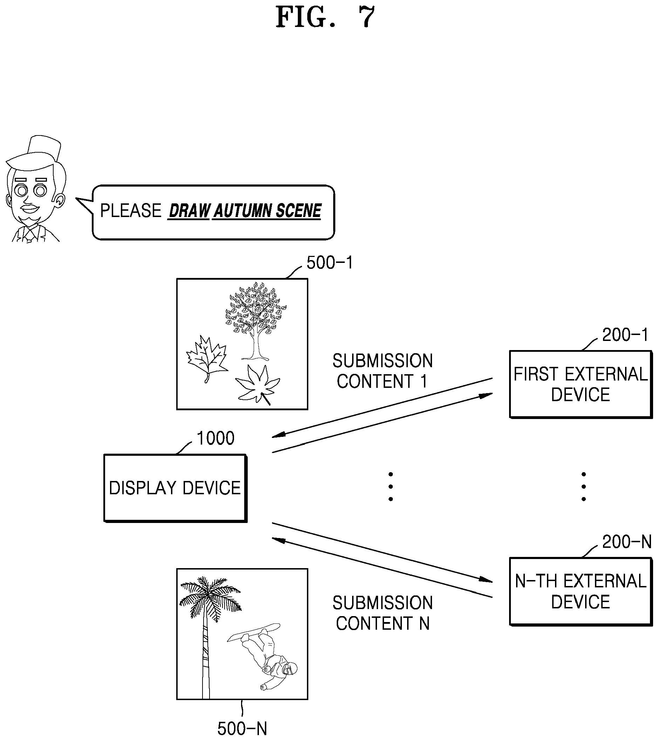

FIG. 7 is a diagram illustrating an example method, to be performed by a display device 1000, of evaluating content of an external device, according to various embodiments of the disclosure.

The example method of evaluating content of an external device illustrated in FIG. 7 may be similar in many respects to the example method described above in reference to FIG. 4, and may include additional features not mentioned above, and/or may exclude features of the abovementioned method. Some descriptions of the elements of the method described above may have been omitted, or may be briefly described, in the interest of clarity and conciseness.

Referring to FIG. 7, the user 100 of the display device 1000 may utter a speech including a certain instruction for the external user of the at least one external device 200.

For example, if or when a teacher (e.g., the user 100 of the display device 1000,) utters a speech such as "please draw an autumn scene", the speech receiver 1310 of the display device 1000 may obtain the speech input of the user 100 of the display device 1000.

After obtaining the speech input, the display device 1000 may use the speech analysis module 1521 of the intent determination module 1520 to interpret the speech input of the user 100. In other embodiments, the display device 1000 may send the speech input obtained to an external server and obtain a result of speech input interpretation from the external server. The intent determination module 1520 may determine an intent of the user 100 based on the result of speech input interpretation.

In some embodiments shown in FIG. 7, the intent of the user 100 of the display device 1000 may be to 'receive' and 'evaluate' the 'submitted content 1 to submitted content N', which are 'drawings' about 'autumn scene' of the students (e.g., the external users of the at least one external device 200). In other words, the utterance intent contained in the user speech may be to 'receive' and 'evaluate' the 'submission content 1 to submission content N', and the user speech 'includes' an instruction having a purpose to 'draw' and 'submit (share)' the 'autumn scene'.

In some embodiments of the disclosure, the display device 1000 may monitor a speech input of the user 100 of the display device 1000, and/or update the intent of the user 100 at certain intervals.

In some embodiments of the disclosure, the display device 1000 may operate to interpret the speech input of the user 100 if or when a certain keyword is included in the speech input of the user 100.

In some embodiments shown in FIG. 7, the display device 1000 may take an instruction word contained in the speech uttered by the user 100 (e.g., a speech input ` please draw',) as a trigger to start interpreting the speech input of the user 100 which is being monitored.

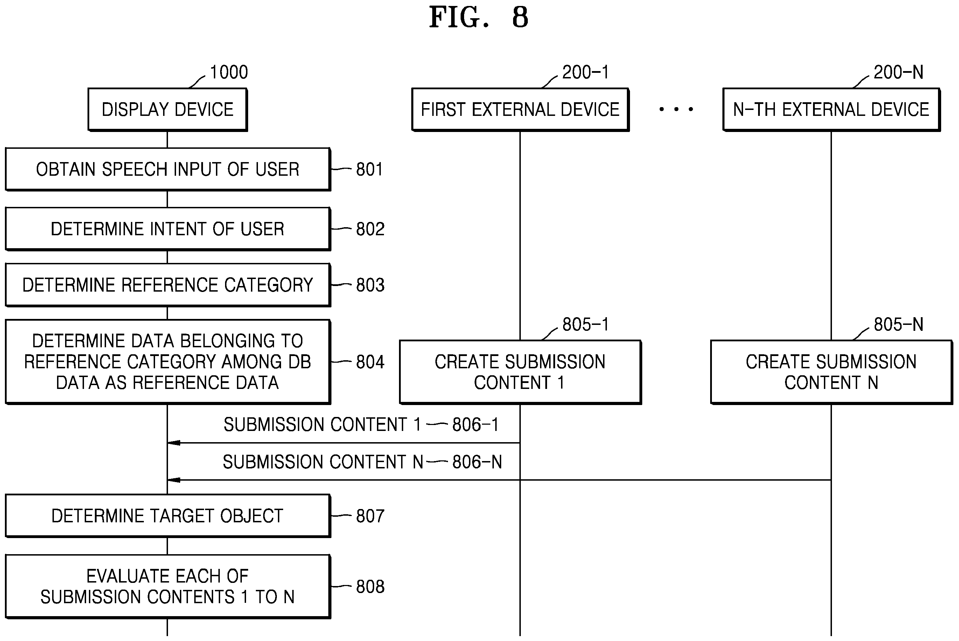

FIG. 8 is an operational flowchart of an example method, to be performed by a display device 1000, of evaluating content of an external device 200, according to various embodiments of the disclosure.

Referring to FIG. 8, a system in which a display device evaluates content of an external device 200 may include the display device 1000 and the at least one external device 200.

The system for evaluating content of an external device depicted in FIG. 8 may be similar in many respects to the architecture of the systems and devices described above in reference to FIGS. 1-6, and may include additional features not mentioned above. Some descriptions of the elements of the systems and devices described above may have been omitted, or may be briefly described, in the interest of clarity and conciseness.

In operation 801, the display device 1000 may obtain a speech input of the user 100 of the display device 1000.

In some embodiments of the disclosure, a speech of the user 100 of the display device 1000 may be received through the input module 1300 (e.g., the speech receiver 1310) of the display device 1000. In some embodiments of the disclosure, the speech input of the user 100 may be a speech of the user 100 of the display device 1000 recognized through speaker recognition from a plurality of user speech inputs entered to the display device 1000.

In operation 802, the display device 1000 may determine an intent of the user 100 based on a result of interpreting the speech input of the user 100.

In some embodiments of the disclosure, the received speech input of the user 100 may be interpreted using the speech analysis module 1521 of the display device 1000 and/or an external server. The intent of the user 100 may be information determined by interpreting text corresponding to the speech input using the NLU model, and may indicate an utterance purpose of the speech input.

Referring to FIG. 7, if or when the result of interpreting the speech input of the user 100 of the display device 1000 indicates that there is an 'instruction' to 'draw' an 'autumn scene', main information for determining the intent of the user 100 may be the 'autumn', 'scene', 'draw', and 'instruction'.

Referring again to FIG. 8, in operation 803, the display device 1000 may determine a reference category based on the intent of the user 100.

Referring to FIG. 7, the main information for determining the intent of the user 100 may be 'autumn', 'scene', 'draw', and 'instruction', and categories corresponding to 'autumn', 'scene', and 'draw' among them may be determined as the reference category. In this case, the reference category may be changed depending on the classified category of data included in a database (DB), and the DB may be outside of the display device 1000.

Referring again to FIG. 8, in operation 804, the display device 1000 may determine data belonging to the reference category among the DB data as the reference data.

Referring to FIG. 7, as categories corresponding to 'autumn' and 'scene' are determined as the reference category, the display device 1000 may determine an image (drawing) classified into an 'autumn' category and an image (drawing) classified into a 'scene' as the reference data.

Referring again to FIG. 8, in operation 805, the at least one external device 200 may create content for submission (e.g., submission content 806-1 to submission content 806-N).

The at least one external device 200 may create the submission content (e.g., submission content 806-1 to submission content 806-N) based on inputs of the external user of the at least one external device 200 corresponding to a speech uttered by the user 100 of the display device 1000.

In operation 806, the at least one external device 200 may transmit the submission content to the display device 1000.

Referring to FIG. 7, if or when the intent of the user 100 is to receive and evaluate the submission content, which may be a drawing about an 'autumn' 'scene', the submission content (e.g., submission content 806-1 to submission content 806-N) may be a 'drawing of an autumn scene' freely drawn by the external user of the at least one external device 200.

Referring again to FIG. 8, in operation 807, the display device 1000 may determine at least one target object to be compared with the reference data from among objects contained in the submission content 305.

Referring to FIG. 7, if or when the intent of the user 100 is to receive and evaluate the submission content, which may be a drawing about an 'autumn' 'scene', the target object may be an object corresponding to a 'drawing' among objects included in each 'drawing of an autumn scene' freely drawn by the external user of the at least one external device 200.

Referring again to FIG. 8, in operation 808, the display device 1000 may evaluate each submission content received by comparing the reference data with the at least one target object.

In some embodiments of the disclosure, the processor 1100 of the display device 1000 may provide (e.g., feed back) information about the content evaluation to at least one external device of the at least one external device 200.

In some embodiments of the disclosure, the processor 1100 of the display device 1000 may obtain a score for a result of a comparison between the at least one target object and the reference data, and feed back information about the content evaluation to at least one external device of the at least one external device 200 if or when the score for the result of the comparison is equal to or less than a certain threshold.

In some embodiments of the disclosure, the processor 1100 of the display device 1000 may output the information about the content evaluation on the output module 1400 of the display device 1000. For example, the display device 1000 may display the information about the content evaluation on the display module 1410 of the display device 1000.

In some embodiments of the disclosure, the processor 1100 of the display device 1000 may obtain a score for a result of a comparison between the at least one target object and the reference data, and display the information about the content evaluation on the display module 1410 of the display device 1000 if or when the score for the result of the comparison is equal to or less than a certain threshold.

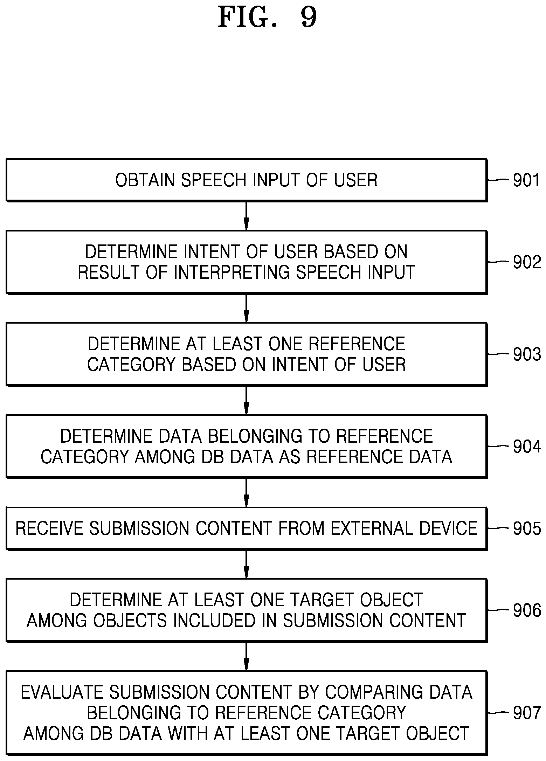

FIG. 9 is a sequence chart of an example method, to be performed by a display device 1000, of evaluating content of an external device 200, according to various embodiments of the disclosure.

Referring to FIG. 9, the display device 1000 may be a device configured to deliver visual information. The display device 1000 may transmit and/or receive certain content to and/or from the external device 200 connected through the network 300. Alternatively or additionally, the display device 1000 may evaluate the certain content received from the external device 200.

The system for evaluating content of an external device depicted in FIG. 9 may be similar in many respects to the architecture of the systems and devices described above in reference to FIGS. 1-8, and may include additional features not mentioned above. Some descriptions of the elements of the systems and devices described above may have been omitted, or may be briefly described, in the interest of clarity and conciseness.

In operation 901, the display device 1000 may obtain a speech input of the user 100 of the display device 1000.

In some embodiments of the disclosure, a speech of the user 100 of the display device 1000 may be received through the input module 1300 (e.g., the speech receiver 1310) of the display device 1000. In some embodiments of the disclosure, the speech input of the user 100 may be a speech of the user 100 of the display device 1000 recognized through speaker recognition from a plurality of user speech inputs entered to the display device 1000.

In operation 902, the display device 1000 may determine an intent of the user 100 based on a result of interpreting the speech input of the user 100.

In some embodiments of the disclosure, the received speech input of the user 100 may be interpreted using the speech analysis module 1521 and/or an external server. The intent may be information determined by interpreting text corresponding to the speech input using the NLU model, and may indicate an utterance purpose of the speech input.

In operation 903, the display device 1000 may determine a reference category based on the intent of the user 100.

Referring to FIG. 7, the main information for determining the intent of the user 100 may be 'autumn', 'scene', 'draw', and 'instruction', and categories corresponding to 'autumn', 'scene', and 'draw', and the reference category may be determined from among the categories in the main information. In this case, the reference category may be changed depending on the classified category of data included in a database (DB). In some embodiments, the DB may be stored outside of (e.g., separate from) the display device 1000.

Referring again to FIG. 9, in operation 904, the display device 1000 may determine, from among the DB data, data belonging to the reference category as the reference data.

Referring to FIG. 7, if or when categories corresponding to 'autumn' and 'scene' are determined as the reference category, the display device 1000 may determine an image (e.g., drawing) classified into an 'autumn' category and an image (e.g., drawing) classified into a 'scene' as the reference data.

Referring again to FIG. 9, in operation 905, the display device 1000 may receive submission content from an external device 200.

The external device 200 may transmit, to the display device 1000, the submission content created in response to a speech uttered by the user 100 of the display device 1000. Alternatively or additionally, the display device 1000 may receive the submission content created by the external device 200, in response to the speech uttered by the display user 100.

Referring to FIG. 7, if or when the intent of the user 100 is to receive and evaluate the submission content, which may be a drawing about an 'autumn' 'scene', the submission content (e.g., submission content 1 to submission content N) may be a 'drawing of an autumn scene' freely drawn by the external user of the at least one external device 200.

Referring again to FIG. 9, in operation 906, the display device 1000 may determine at least one target object to be compared with the reference data from among objects contained in the submission content 305.

Referring to FIG. 7, if or when the intent of the user 100 is to receive and evaluate the submission content, which may be a drawing about an 'autumn' 'scene', the target object may be an object corresponding to a 'drawing' among objects included in each 'drawing of an autumn scene' freely drawn by the external user of the at least one external device 200.

Referring again to FIG. 9, in operation 907, the display device 1000 may evaluate each submission content received by comparing the reference data with the at least one target object.

FIG. 10 is an operational flowchart of an example method, to be performed by a display device 1000, of evaluating content of an external device 200, according to various embodiments of the disclosure.

Referring to FIG. 10, a system in which a display device evaluates content of an external device 200 may include the display device 1000 and the at least one external device 200.

The system for evaluating content of an external device depicted in FIG. 10 may be similar in many respects to the architecture of the systems and devices described above in reference to FIGS. 1-9, and may include additional features not mentioned above. Some descriptions of the elements of the systems and devices described above may have been omitted, or may be briefly described, in the interest of clarity and conciseness.

In some embodiments, the teacher (e.g., user 100 of display device 1000) may need to monitor the screen of the at least one external device 200. Alternatively or additionally, the teacher may need to use the screen of the at least one external device 200 as a material for a class by sharing the screen with the other students. That is, the teacher may need to display the screen of at least one external device 200 as a screen of the display device 1000.

In such embodiments, the teacher and the student may be placed facing each other and/or may be located in different spaces and/or locations (e.g., a remote class). Consequently, the teacher may be unable to see a screen of the at least one external device 200 used of the student, and as such the teacher may be unable to see whether the screen of the at least one external device 200 is displaying content that is unrelated to the class, and/or the teacher may not be able to identify whether the student is using the at least one external device 200 for different purposes.

That is, in a situation in which the teacher may be unable to directly see and/or monitor the screen of the student (e.g., external user of the external device 200), sharing of a screen of a student may be inappropriate if or when that student is displaying content unrelated to the class on the screen and/or is using the at least one external device 200 for different purposes.

In some embodiments of the disclosure, the display device 1000 may obtain the content being displayed from the at least one external device 200 at certain intervals set by the user 100 and/or in response to obtaining an input (e.g., a monitoring request command) of the user 100. The display device 1000 may estimate whether content unrelated to the intent of the user 100 is being displayed and/or whether sharing of the content being displayed is inappropriate.

In operation 1001, the at least one external device 200 each may display content (e.g., content 1 to content N). For example, the first external device 200-1 may display content 1. Alternatively or additionally, the N-th external device may display content N.

The content (e.g., content 1 to content N) displayed on the at least one external device 200 may be content displayed by the external user of the at least one external device 200.

In operation 1002, the at least one external device 200 may transmit the respective content (e.g., content 1 to content N) to the display device 1000. Alternatively or additionally, the display device 1000 may receive the respective content (e.g., content 1 to content N) from the at least one external device 200.

In some embodiments of the disclosure, the display device 1000 may send the at least one external device 200 a request to transmit the content (e.g., content 1 to content N) being displayed, in response to an input (e.g., a monitoring request command) of the user 100 and/or at certain intervals set in advance, in order to monitor the content being displayed on the at least one external device 200.

In operation 1003, the display device 1000 may obtain object set 1 to object set N included in the content 1 to content N, respectively.

For example, the processor 1100 of the display device 1000 may drive the image analysis module 1522 to analyze the content 1 to content N received from the at least one external device 200-1 to 200-N and extract objects contained in the received content 1 to content N.

In operation 1004, the display device 1000 may determine an intent of the user 100 based on the result of interpreting the object set 1 to object set N included in the content 1 to content N, respectively.

For example, the processor 1100 of the display device 1000 may drive the image analysis module 1522 to determine at least one category of the object set 1 to object set N included in the content 1 to content N. In some embodiments, the at least one category may have a hierarchical relationship with each other.

In other embodiments of the disclosure, the display device 1000 may further use an object set included in content displayed on the display device 1000 to determine the at least one category of the object set 1 to object set N.

In some embodiments of the disclosure, the display device 1000 may determine weights for each external device of the at least one external device 200 and apply the weights to the object set 1 to object set N, to determine the at least one category of the object set 1 to object set N.

The intent of the user 100 may be information determined based on the category of object obtained from an image analysis result, which may represent a purpose of the user 100 of the display device 1000 to use the display device 1000 and/or to convey pieces of content or subject to the external user of the at least one external device 200-1 to 200-N.

In some embodiments of the disclosure, the display device 1000 may monitor a speech input of the user 100, and the intent of the user 100 may be determined based further on a result of interpreting the speech input of the user 100.

In operation 1005, the display device 1000 may evaluate the content 1 to content N based on the intent of the user 100.

In some embodiments of the disclosure, the display device 1000 may determine whether the object set 1 to object set N belong to the at least one category of the object set 1 to object set N each determined based on the intent of the user 100, and evaluate each of the content 1 to content N based on a result of the determining.

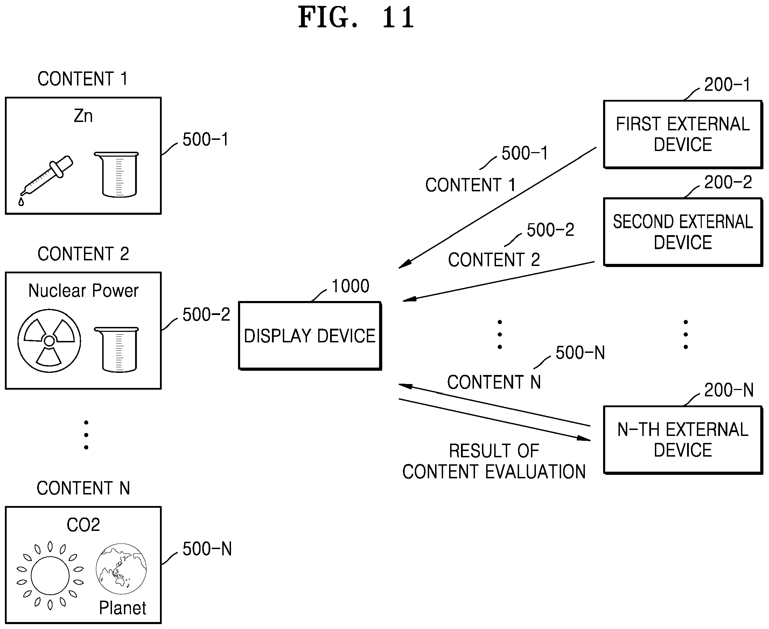

FIG. 11 is a diagram illustrating an example method, to be performed by a display device 1000, of evaluating content of an external device 200, according to various embodiments of the disclosure.

Referring to FIG. 11, the display device 1000 may receive pieces of content 500-1 to 500-N from the at least one external device 200.

For example, the display device 1000 may send the at least one external device 200 a request to transmit the content being currently displayed if or when a teacher (e.g., the user 100 of the display device 1000) sets the at least one external device 200 to transmit content being displayed at certain intervals and/or if or when an input of the user 100 requesting to transmit the content being displayed on the at least one external device 200 is received at a particular point in time,.

In some embodiments of the disclosure, if or when a teacher (e.g., the user 100 of the display device 1000) sets the at least one external device 200 to transmit content being displayed at certain intervals, the at least one external device 200 may transmit the content at the specified intervals if or when the at least one external device 200 is connected to the display device 1000, without an additional request from the display device 1000.

The display device 1000 may analyze the content 1 to content N received from the at least one external device 200 to extract an object contained in each content.

Referring to FIG. 11, content 1 being displayed on the first external device 200 may include a first object set corresponding to {`Zn' (text), pipette (image), beaker (image)}. Content 2 being displayed on the second external device 200 may include a second object set corresponding to {`nuclear power' (text), nuclear power

(image), beaker (image)}. Content N being displayed on the N-th external device 200 may include an N-th object set including {'CO₂' (text), 'planet' (text), sun (image), Earth (image)}.

In some embodiments of the disclosure, the display device 1000 may determine an intent of the user 100 based on objects included in the first object set to N-th object set.

Referring to FIG. 11, the objects included in the content 1 to content N may be {Zn (text), pipette (image), beaker (image), nuclear power (text), nuclear power (image), beaker (image),..., CO₂ (text), 'planet' (text), sun (image), and Earth (image)}, and categories corresponding to a result of analyzing these objects may be determined as follows:

**[Table 1]**

| **content** | **object** | **first category (main class)** | **second category (middle class)** | **score** | |
|---|---|---|---|---|---|
| content 1 | Zn (text) | science | chemistry | 30 | |
| | pipette (image) | science | chemistry | | |
| | beaker (image) | science | chemistry | | |
| content 2 | nuclear power (text) | science | physics/chemistry | 26 | |
| | nuclear power (image) | science | physics/chemistry | | |
| | beaker (image) | science | chemistry | | |
| content N | CO₂ (text) | science | chemistry | 19 | |
| | planet (text) | science | Earth science | | |
| | sun (image) | science | Earth science | | |
| | Earth (image) | science | Earth science | | |

In some embodiments of the disclosure, the display device 1000 may determine the first category (main class) corresponding to the intent of the user 100 related to the content 1 to content N to be 'science' and the second category (middle class) to be 'chemistry'.

In some embodiments of the disclosure, the display device 1000 may evaluate the content 1 to content N based on the intent of the user 100 related to the content 1 to content N.

In some embodiments of the disclosure, the display device 1000 may determine scores for the content 1 to content N based on the intent of the user 100 related to the content 1 to content N.

For example, if or when the score for the first category has 16 points and the score for the second category has 12 points, the content 1 obtains 30 points by gaining 18 points of the score for the first category and 12 points of the score for the second category. The content 2 obtains 26 points by gaining 18 points of the score for the first category and 8 points of the score for the second category, and the content N obtains 19 points by gaining 16 points of the score for the first category and 3 points of the score for the second category.

In some embodiments of the disclosure, the display device 1000 may determine weights to be applied to the content 1 to content N, respectively, and evaluate the content 1 to content N by applying the weights corresponding to the content 1 to content N.

For example, the display device 1000 may determine to give a higher weight to content that had a high previous score, based on previous score history of the at least one external device 200.

For example, the display device 1000 may determine weights to be applied to the at least one external device 200, based on an input of the user 100 of the display device 1000.

In some embodiments of the disclosure, the display device 1000 may determine the intent of the user 100 based further on the content being displayed on the display module 1410 of the display device 1000.

For example, the display device 1000 may determine to give the highest weight to the content being displayed on the display module 1410 of the display device 1000.

In some embodiments of the disclosure, the display device 1000 may send evaluation results for the content 1 to content N to the at least one external device 200.

In some embodiments of the disclosure, the display device 1000 may send evaluation results for the content 1 to content N to the at least one external device 200 if or when the scores of the content 1 to content N are equal to or less than a certain threshold.

In some embodiments of the disclosure, the display device 1000 may display the evaluation results for the content 1 to content N on the display module 1410 of the display device 1000.

In some embodiments of the disclosure, the display device 1000 may display the evaluation results for the content 1 to content N on the display module 1410 of the display device 1000 if or when the scores of the content 1 to content N are equal to or less than a certain threshold.

Referring to FIG. 11, if or when the content 1 obtains 30 points, the content 2 obtains 26 points, the content N obtains 19 points, and the threshold score is 20 points, the display device 1000 may send information about the content evaluation result to the N-th external device 200. After obtaining the information about the content evaluation result, the N-th external device 200 may provide the content evaluation result to guide the external user of the N-th external device 200 to consume different content.

Alternatively or additionally, the display device 1000 may display the information about the evaluation results for the content 1 to content N on the display module 1410 of the display device 1000 and/or display the evaluation result for the content N having a score equal to or less than the threshold score.

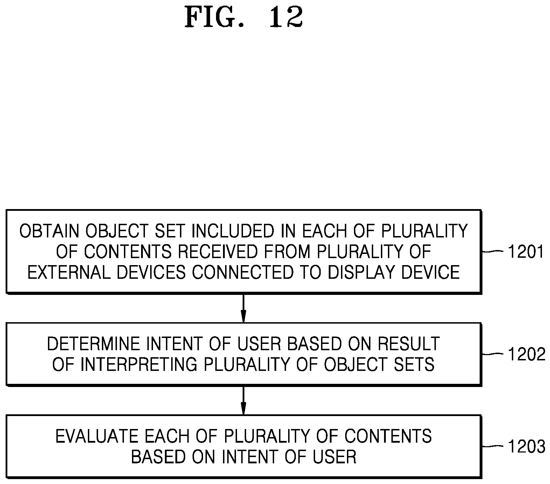

FIG. 12 is a sequence chart of an example method, to be performed by a display device 1000, of evaluating content of an external device, according to various embodiments of the disclosure.

Referring to FIG. 12, the display device 1000 may be a device configured to deliver visual information. The display device 1000 may transmit and/or receive certain content to and/or from the external device 200 through the network 300. Alternatively or additionally, the display device 1000 may evaluate the certain content received from the external device 200.

The system for evaluating content of an external device depicted in FIG. 12 may be similar in many respects to the architecture of the systems and devices described above in reference to FIGS. 1-11, and may include additional features not mentioned above. Some descriptions of the elements of the systems and devices described above may have been omitted, or may be briefly described, in the interest of clarity and conciseness.

In operation 1201, the display device 1000 may obtain object sets included in a plurality of pieces of content received from a plurality of external devices 200 connected to the display device 1000.

The at least one external device 200 may transmit the respective pieces of content (e.g., content 1 to content N) being displayed to the display device 1000, and the display device 1000 may receive the respective pieces of content (content 1 to content N) from the at least one external device 200. The display device 1000 may obtain object set 1 to object set N included in the content 1 to content N, respectively.

In some embodiments of the disclosure, the processor 1100 of the display device 1000 may drive the image analysis module 1522 to analyze the content 1 to content N received from the at least one external device 200-1 to 200-N and extract objects contained in the received content 1 to content N.

In operation 1202, the display device 1000 may determine an intent of the user 100 based on a result of interpreting the plurality of object sets (object set 1 to object set N).

In some embodiments of the disclosure, the processor 1100 of the display device 1000 may drive the image analysis module 1522 to determine at least one category of the object set 1 to object set N included in the content 1 to content N. The at least one category may have a hierarchical relationship with each other.

In operation 1203, the display device 1000 may evaluate each of the plurality of pieces of content (e.g., content 1 to content N) based on the intent of the user 100.

In some embodiments of the disclosure, the display device 1000 may determine whether the object set 1 to object set N belong to the at least one category of the object set 1 to object set N each determined based on the intent of the user 100, and evaluate each of the content 1 to content N based on a result of the determining.

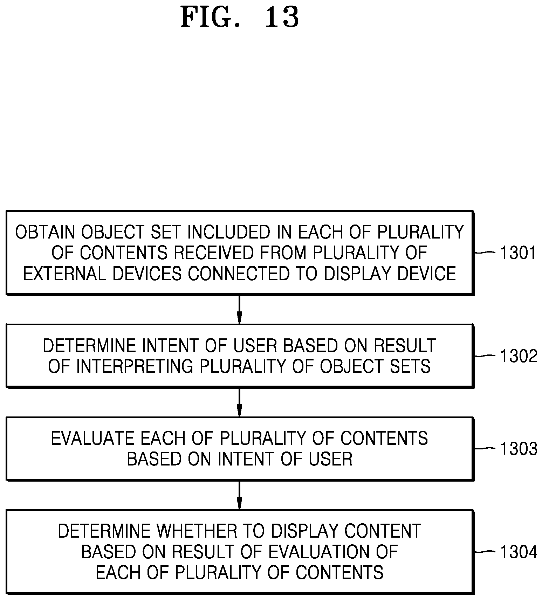

FIG. 13 is a sequence chart of an example method, to be performed by a display device 1000, of evaluating content of an external device, according to various embodiments of the disclosure.

In FIG. 13, operations 1301 to 1303 may correspond to operations 1201 to 1203 of FIG. 12, as such, descriptions thereof will not be repeated.

Referring to FIG. 13, the display device 1000 may determine whether to share content based on a result of evaluating the content of the at least one external device 200-1 to 200-N.

In some embodiments of the disclosure, at certain intervals set by the teacher and/or after obtaining an input (e.g., a monitoring request command) from the teacher, the display device 1000 may transmit a request to share a current screen to the at least one external device 200. Upon receiving the request to share the current screen, the at least one external device 200 may transmit the current screen displayed on the at least one external device 200 to the display device 1000. The display device 1000 may evaluate the content displayed on each of the at least one external device 200 based on the content displayed on the current screen of the at least one external device 200 or the content displayed on the display device 1000.

In operation 1301, the display device 1000 may obtain an object set included in each of a plurality of pieces of content received from a plurality of external devices200-1 to 200-N connected, through the network 300, to the display device 1000.

In operation 1302, the display device 1000 may determine an intent of the user 100 based on a result of interpreting the plurality of object sets (object set 1 to object set N).

In operation 1303, the display device 1000 may evaluate each of the plurality of pieces of content (e.g., content 1 to content N) based on the intent of the user 100.

In operation 1304, the display device 1000 may determine whether to display the content based on a result of evaluating each of the plurality of pieces of content (e.g., content 1 to content N).

For example, the teacher may intend to use a screen of the at least one external device 200 as a material for the class by sharing the screen with the other students. That is, the teacher (e.g., user 100 of the display screen 1000) may intend to display the content of the screen of the at least one external device 200 on the output module 1400 of the display device 1000.

In such an example, the teacher and the student may be placed facing each other and/or the teacher and the student may be located in different spaces and/or locations (e.g., during a remote class). Consequently, the teacher may be unable to see a screen of the at least one external device 200 of the student, and, as such, sharing of the screen of the student may be inappropriate if or when the screen of the student has content unrelated to the class and/or the student is using the at least one external device 200 for different purposes.

Accordingly, if or when the result of evaluating each of the plurality of pieces of content (e.g., content 1 to content N) is poor (e.g., if or when the score obtained is equal to or less than the certain threshold), the display device 1000 may determine to not display the corresponding content on the display module 1410.

Methods according to the claims of the disclosure or the embodiments described in the specification may be implemented in hardware, software, or a combination of hardware and software.

When implemented in software, a computer-readable storage medium or computer program product storing one or more programs (software modules) may be provided. The one or more programs stored in the computer-readable storage medium or computer program product may be configured for execution by one or more processors in an electronic device. The one or more programs include instructions that cause the electronic device to perform the methods in accordance with the claims of the disclosure or the embodiments described in the specification.

The programs (software modules, software) may be stored in a random access memory (RAM), a non-volatile memory including a flash memory, a read only memory (ROM), an electrically erasable programmable ROM (EEPROM), a magnetic disc storage device, a compact disc-ROM (CD-ROM), a digital versatile disc (DVD) or other types of optical storage device, and/or a magnetic cassette. Alternatively or additionally, the programs may be stored in a memory including a combination of some or all of them. There may be a plurality of memories.

The program may also be stored in an attachable storage device that may be accessed over a communication network including the Internet, an intranet, a local area network (LAN), a wide LAN (WLAN), a storage area network (SAN), or a combination thereof. The storage device may be connected to an apparatus for performing the embodiments of the disclosure through an external port. Furthermore, an extra storage device in the communication network may access a device that performs the embodiments of the disclosure.

In the disclosure, the term 'computer program product' or 'computer-readable recording medium' is used to generally indicate a medium such as a memory, a hard disc installed in a hard disc drive, and a signal. The "computer program product" or "computer-readable recording medium" is to provide software including instructions to analyze and evaluate content according to the disclosure to a display device.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In some embodiments of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., Google Play Store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In the embodiments of the disclosure, a component is represented in a singular or plural form. It should be understood, however, that the singular or plural representations are selected appropriately according to the situations presented for convenience of explanation, and the disclosure is not limited to the singular or plural form of the component. Further, the component expressed in the plural form may also imply the singular form, and vice versa.

All of the features disclosed in this specification (including any accompanying claims, abstract and drawings), and/or all of the steps of any method or process so disclosed, may be combined in any combination, except combinations where at least some of such features and/or steps are mutually exclusive. In other words, combinations of the embodiments disclosed herein are envisaged and are therefore included within the scope of the disclosure.

It will be appreciated that one or more of the operations of an embodiment of the disclosure may be performed in an order different to that described above, unless a conflict or inconsistency would arise (for example, where an operation (or the performing thereof) depends on the result/outcome of another operation, the operation is performed after the other operation). For example, one of more of the operations of Figures 3, 5, 6, 8, 9, 10, 12 and/or 13 may be performed in an order different to that shown, unless a conflict or inconsistency would arise by changing the order.

Several embodiments of the disclosure have thus been described, but it will be understood that various modifications can be made without departing the scope of the disclosure. Thus, it will be apparent to those ordinary skilled in the art that the disclosure is not limited to the embodiments described, but can encompass the appended claims and their equivalents.

In an embodiment of the disclosure, instead of a speech input of a user, another type of input may be obtained. For example, a text input or a gesture input of a user may be obtained by the display device 1000. The obtained input may be interpreted (or parsed, or recognized etc.), and an intent determined based on a result of the interpreting. For example, an obtained text input may be interpreted and an intent determined based on the result.

In an embodiment of the disclosure the reference data may be determined. For example, the display device 1000 may determine the reference data based on the intent of the user and/or a reference category.

In an embodiment of the disclosure, a submission content may be obtained or acquired from a server or a device other than an external device which creates the submission content. For example, the external device which creates the submission content may transmit the submission content to a server or external storage, and the display device 1000 may obtain the submission content from the server or the external storage.

In an embodiment of the disclosure, at least one target object may be identified among one or more objects included in the submission content. For example, the display device 1000 may identify a target object among objects included in the submission content, the identified target object to be compared with the reference data.

In an embodiment of the disclosure, the submission content may be evaluated based on the reference data and/or the at least one target object. For example, the display device 1000 may evaluate the submission content based on the reference data and the at least one target object. In another example, the evaluation may include comparing the at least one target object with the reference data.

In an embodiment of the disclosure, there is provided an external device arranged to perform a corresponding method to that of the display device 1000. Another embodiment of the disclosure provides a method of such an external device.

It will be appreciated that one or more embodiments of the disclosure may be in accordance with one or more of the following paragraphs:

According to a first embodiment of the disclosure, a method of analyzing content in a device, comprises: obtaining an input of a user; determining an intent of the user based on the obtained input; obtaining reference data based on the intent of the user; obtaining submission content; and comparing at least one target object with the reference data. For example, determining an intent of the user based on the obtained input may comprise determining the intent of the user based on a result of interpreting the input of the user.

According to a second embodiment of the disclosure, there is provided the method of the first embodiment, wherein the obtaining of the reference data comprises: determining at least one correctly answered object among objects included in reference content displayed on the device based on the intent of the user; and determining the at least one correctly answered object as the reference data.

According to a third embodiment of the disclosure, there is provided the method of the second embodiment, wherein the submission content comprises content obtained by adding an input of a user of the external device to the reference content, which is obtained in response to sharing the reference content with the external device by the device, and the at least one target object is determined to correspond to the input of the user of the external device.

According to a fourth embodiment of the disclosure, there is provided the method of any of the first embodiment to the third embodiment, wherein the obtaining of the reference data comprises: determining at least one reference category based on the intent of the user; and determining data included in the at least one reference category among data stored in a database as the reference data.

According to a fifth embodiment of the disclosure, there is provided the method of any of the first embodiment to the fourth embodiment, wherein the obtaining of the input of the user comprises: recognizing a speech of the user of the device among a plurality of user speech inputs entered to the device, recognizing a text input by the user (optionally, among a plurality of texts entered in to the device), or recognizing a gesture input by the user (optionally, among a plurality of gestures identified by the device).

According to a sixth embodiment of the disclosure, there is provided the method of any of the first embodiment to the fifth embodiment, wherein the intent of the user comprises at least one of an intention of the input, whether there is an instruction, a type of the instruction, and a subject of content.

According to a seventh embodiment of the disclosure, there is provided the method of any of the first embodiment to the sixth embodiment, further comprising: evaluating the submission content based on a result of the comparison; and, optionally, sending information about a result of the evaluation to at least one of the device or the external device.

According to an eighth embodiment of the disclosure, there is provided the method of the seventh embodiment, wherein evaluating the submission content comprises obtaining a score for a result of comparing the at least one target object with the reference data, and the method further comprising: sending information about the result of the comparing to at least one of the device or the external device when the score is equal to or less than a certain threshold.

According to a ninth embodiment of the disclosure, a device comprises: a display; an input module configured to obtain an input; a communication module configured to obtain submission content; a storage configured to store a program including at least one instruction; and at least one processor configured to execute the at least one instruction stored in the storage, wherein the at least one processor is configured to execute the at least one instruction to: determine an intent of the user based on the input of the user; obtain reference data based on the intent of the user; and compare least one target object with the reference data. For example, determining an intent of the user based on the input of the user may comprise determining an intent of the user based on a result of interpreting the input of the user.

According to a tenth embodiment of the disclosure, there is provided the device of the ninth embodiment wherein the at least one processor is configured to determine at least one correctly answered object among objects included in reference content displayed on the device and determine the at least one correctly answered object as the reference data.

According to an eleventh embodiment of the disclosure, there is provided the device of the tenth embodiment, wherein the submission content comprises content obtained by adding an input of a user of the external device to the reference content, which is obtained in response to sharing the reference content with the external device by the device, and wherein the at least one target object is determined to correspond to the input of the user of the external device.

According to a twelfth embodiment of the disclosure, there is provided the device of any of the ninth embodiment to the eleventh embodiment, wherein the at leat one processor is configured to determine at least one reference category based on the intent of the user and determine data included in the at least one reference category among data stored in a database as the reference data.

According to a thirteenth embodiment of the disclosure, a method of analyzing content in a device comprises: obtaining a plurality of object sets included in a plurality of content (e.g., a plurality of pieces of content) received from a plurality of external devices; determining an intent of a user of the device based on at least one of the plurality of object sets; and evaluating at least one of the plurality of content based on the intent of the user. For example, determining an intent of the user based on at least one of the plurality of object sets may comprise determining the intent of a user of the device based on a result of interpreting the plurality of object sets. For example, evaluating at least one of the plurality of content based on the intent of the user may comprise evaluating the plurality of content based on the intent of the user.

According to a fourteenth embodiment of the disclosure, there is provided the method of the thirteenth embodiment, wherein the determining of the intent of the user comprises determining at least one category based on the result of interpreting the plurality of object sets, and wherein the evaluating of each of the plurality of pieces of content comprises identifying whether each of the plurality of object sets belongs to the at least one category.

According to a fifteenth embodiment of the disclosure, there is provided the method of the fourteenth embodiment, further comprising obtaining an object set included in content displayed on the device, wherein the determining of the intent of the user comprises determining the at least one category based on the plurality of object sets and the object set included in the device.

According to a sixteenth embodiment of the disclosure, there is provided the method of any of the thirteenth embodiment to the fifteenth embodiment, further comprising: obtaining an input of the user, wherein the determining of the intent of the user comprises determining the intent of the user based further on a result of interpreting the obtained input. For example, the input may be a speech input, or a text input, or a gesture input etc.

According to a seventeenth embodiment of the disclosure, there is provided the method of any of the thirteenth embodiment to the sixteenth embodiment, wherein the determining of the intent of the user comprises: identifying a plurality of weights for each of the plurality of external devices; and determining an intent of the user based on the plurality of object sets with the plurality of weights applied to each of the plurality of external devices.

According to an eighteenth embodiment of the disclosure, there is provided the method of any of the thirteenth embodiment to the seventeenth embodiment, further comprising: sending information about a result of the evaluation to the device and/or to one or more of the plurality of external devices.

According to a nineteenth embodiment of the disclosure, there is provided the method of any of the thirteenth embodiment to the eighteenth embodiment, wherein the evaluating of each of the plurality of content comprises obtaining a score for each of the plurality of content based on the at least one category, and the method further comprising: sending a result of evaluating content having the score equal to or less than a certain threshold among the plurality of pieces of content to at least one of the device or an external device corresponding to the content having the score equal to or less than the certain threshold.

According to a twentieth embodiment of the disclosure, a device comprises: a display; a communication module configured to receive a plurality of content (e.g., a plurality of pieces of content) from a plurality of external devices; a storage configured to store a program including at least one instruction; and at least one processor configured to execute the at least one instruction stored in the storage, wherein the at least one processor is configured to execute the at least one instruction to: obtain a plurality of object sets included in the plurality of content, determine an intent of a user of the device based on at least one of the plurality of object sets, and evaluate at least one of the plurality of content based on the intent of the user. For example, determining an intent of the user based on at least one of the plurality of object sets may comprise determining the intent of a user of the device based on a result of interpreting the plurality of object sets. For example, evaluating at least one of the plurality of content based on the intent of the user may comprise evaluating the plurality of content based on the intent of the user.

According to a twenty-first embodiment of the disclosure, there is provided the device of the twentieth embodiment, wherein the at least one processor is configured to: determine at least one category based on a result of interpreting the plurality of object sets, and identify whether each of the plurality of object sets belongs to the at least one category.

According to a twenty-second embodiment of the disclosure, there is provided the device of the twenty-first embodiment, wherein the at least one processor is configured to: obtain an object set included in content displayed on the device, and determine the at least one category based on the plurality of object sets and the object set included in the device (e.g., to determine an intent of the user).

According to a twenty-third embodiment of the disclosure, there is provided the device of any one of the twentieth embodiment to the twenty-second embodiment, further comprising: an input module configured to obtain an input of the user, wherein the at least one processor is configured to determine an intent of the user based further on a result of interpreting the obtained input obtained. For example, the input may be a speech input (e.g., the input module may comprise a receiver), or a text input, or a gesture input etc.

According to a twenty-fourth embodiment of the disclosure, there is provided the device of any of the twentieth embodiment to the twenty-third embodiment, wherein the at least one processor is configured to identify a plurality of weights for each of the plurality of external devices and determine an intent of the user based on the plurality of object sets with the plurality of weights applied to each of the plurality of external devices.

According to a twenty-fifth embodiment of the disclosure, there is provided the device of any of the twentieth embodiment to the twenty-fourth embodiment, wherein the at least one processor is configured to send information about a result of the evaluation to the device or the plurality of external devices through the communication module.

According to a twenty-sixth embodiment of the disclosure, there is provided the device of any of the twentieth embodiment to the twenty-fifth embodiment, wherein the at least one processor is configured to: obtain a score for each of the plurality of content based on the at least one category (for example, to evaluate each of the plurality of content), and send a result of evaluating content having the score equal to or less than a certain threshold among the plurality of content to at least one of the device or an external device corresponding to the content having the score equal to or less than the certain threshold.

According to a twenty-eighth embodiment of the disclosure, there is provided a computer-readable recording medium having a program recorded thereon for a computer to execute the method of the first embodiment or the method of the thirteenth embodiment.

## Claims

1. A method of analyzing and evaluating content at a display device, comprising:
obtaining a speech input of a user of the display device;
determining an intent of the user, based on a first result of interpreting the speech input;
obtaining reference data based on the intent of the user;
obtaining submission content from an external device, the external device being connected to the display device;
determining at least one target object to be compared with the reference data from among objects included in the submission content; and
evaluating the submission content by comparing the at least one target object with the reference data.

2. The method of claim 1, wherein the obtaining of the reference data comprises:
determining, based on the intent of the user, at least one correctly answered object from among objects included in reference content, the reference content being displayed on the display device; and
determining the at least one correctly answered object as the reference data.

3. The method of claim 2,
wherein the submission content comprises content obtained by adding an input of an external user of the external device to the reference content, which is obtained in response to sharing the reference content with the external device by the display device, and
wherein the at least one target object is determined to correspond to the input of the external user of the external device.

4. The method of claim 1, wherein the obtaining of the reference data comprises:
determining at least one reference category based on the intent of the user; and
determining data included in the at least one reference category from among data stored in a database as the reference data.

5. The method of claim 1, wherein the obtaining of the speech input of the user comprises recognizing a speech of the user of the display device from a plurality of user speech inputs entered to the display device.

6. The method of claim 1, wherein the intent of the user comprises at least one of:
an intention of the speech input;
an indication of whether there is an instruction;
a type of the instruction; and
a subject of content.

7. The method of claim 1, further comprising sending information indicating a second result of the evaluating of the submission content to at least one of the display device and the external device.

8. The method of claim 1, wherein:
the evaluating of the submission content comprises obtaining a score for a third result of comparing the at least one target object with the reference data, and
the method further comprises sending, when the score is equal to or less than a certain threshold, information indicating the third result to at least one of the display device and the external device.

9. A display device for analyzing and evaluating content, comprising:
a display;
a speech receiver configured to obtain a speech input of a user;
a communication interface configured to obtain submission content from an external device, the external device being connected to the display device;
a memory storage configured to store a program, the program including at least one instruction; and
at least one processor communicatively coupled to the display, the speech receiver, the communication interface, and the memory storage,
wherein the at least one processor is configured to execute the at least one instruction to:
determine an intent of the user based on a result of interpreting the speech input of the user;
obtain reference data based on the intent of the user;
determine at least one target object to be compared with the reference data from among objects included in the submission content; and
evaluate the submission content by comparing the at least one target object with the reference data.

10. The display device of claim 9, wherein the at least one processor is further configured to execute further instructions to:
determine at least one correctly answered object from among objects included in reference content, the reference content being displayed on the display device; and
determine the at least one correctly answered object as the reference data.

11. The display device of claim 10, wherein the submission content comprises content obtained by adding an input of an external user of the external device to the reference content, which is obtained in response to sharing the reference content with the external device by the display device, and
wherein the at least one target object is determined to correspond to the input of the external user of the external device.

12. The display device of claim 9, wherein the at least one processor is further configured to execute further instructions to:
determine at least one reference category based on the intent of the user; and
determine data included in the at least one reference category from among data stored in a database as the reference data.

13. The display device of claim 9, wherein the at least one processor is further configured to execute further instructions to:
obtain of the speech input of the user comprises recognizing a speech of the user of the display device from a plurality of user speech inputs entered to the display device.

14. The display device of claim 9,
wherein the intent of the user comprises at least one of:
an intention of the speech input;
an indication of whether there is an instruction;
a type of the instruction; and
a subject of content.

15. A computer-readable storage medium storing instructions that, when executed by at least one processor of the display device, cause the display device to perform the method of claim 1.
